# EUROPEAN PATENT APPLICATION

(11) **EP 2 570 965 A2**
(43) Date of publication of application: **20.03.2013**
(21) Application number: 12184403.9
(22) Date of filing: 14.09.2012
(51) Int. Cl.: G06K 9/00, G06Q 30/00

(54) **Detection device, display control device and imaging control device, provided with the detection device, body detection method, control program, and recording medium**

(30) Priority: 15.09.2011 JP 2011202432
(71) Applicant: OMRON CORPORATION, Kyoto-shi, Kyoto 600-8530 (JP)
(72) Inventor: Tanaka, Kiyoaki, Kyoto 600-8530 (JP); Urabe, Kazuya, Kyoto 600-8530 (JP); Takayama, Takahiro, Kyoto, Kyoto 600-8530 (JP)
(74) Representative: Horn Kleimann Waitzhofer

(57) **Abstract**

This invention provides a detection device that recognizes and detects an animal and a person from an image. The detection device includes an animal detector that detects the animal from the image, a person detector that detects the person from the image, and a detection result output part that outputs information indicating that a target body is detected as a detection result when the animal and the person are detected.

## Description

### 1. TECHNICAL FIELD

The present invention relates to a detection device that detects a specific body by image recognition, a display control device and an imaging control device, which are provided with the detection device, a body detection method, a control program, and a recording medium.

### 2. RELATED ART

Conventionally, image recognition technology is widely and actively used in various scenes.

For example, Japanese Unexamined Patent Publication No. 2002-073321 discloses an image display method in which an effect and a value of an advertisement or a display image can be enhanced by automatically switching the displayed advertisement according to a feature of a person. In an image display system disclosed in Japanese Unexamined Patent Publication No. 2002-073321, the image of the person is captured with an image senso7r, the first feature of the extracted person is detected, and the image displayed on an image display medium is switched according to the first feature.

Japanese Unexamined Patent Publication No. 2004-054376 discloses group attribute estimation method and apparatus for estimating a group attribute of a group formed by plural persons. The group attribute estimation apparatus disclosed in Japanese Unexamined Patent Publication No. 2004-054376 performs person extraction processing of extracting a customer from a captured scene image of a store, and estimates plural customers forming the same group from the extracted customers. The group attribute estimation apparatus further estimates a person attribute in each of the grouped customers to estimate the group attribute.

Japanese Unexamined Patent Publication No. 2008-021035 discloses an image recognition apparatus that distinguishes a pedestrian from other predetermined animals. The image recognition apparatus disclosed in Japanese Unexamined Patent Publication No. 2008-021035 distinguishes predetermined animals from the pedestrian based on a size and a shape of an outline of a body, which is detected from the image to become a candidate of the distinction.

Japanese Unexamined Patent Publication No. 2010-134910 discloses pet image detection system and method for detecting a pet image of a pet of the detected person. In the pet image detection system disclosed in Japanese Unexamined Patent Publication No. 2010-134910, a person image is detected from a subject image to identify the person of the person image. Then the pet image detection system finds the pet image from the subject image from pet information related to the previously-identified person in a personal information table.

However, the technologies disclosed in Japanese Unexamined Patent Publication Nos. 2002-073321 and 2004-054376 are intended to detect the person. Therefore, the technologies disclosed in Japanese Unexamined Patent Publication Nos. 2002-073321 and 2004-054376 cannot be used to detect animals except the person.

The technology disclosed in Japanese Unexamined Patent Publication No. 2008-021035 is intended to distinguish the pedestrian from the animals except the pedestrian in each body that is the extracted distinction target. Therefore, the technology disclosed in Japanese Unexamined Patent Publication No. 2008-021035 cannot be used to detect plural specific bodies.

In the pet image detection system disclosed in Japanese Unexamined Patent Publication No. 2010-134910, it is necessary to previously produce the personal information table in which the person is correlated with the pet information on the pet in order to detect the pet of the person. Therefore, a (unspecified) person who is not registered in the personal information table and a pet cannot be detected. Therefore, for example, the pet image detection system disclosed in Japanese Unexamined Patent Publication No. 2010-134910 cannot be used to detect the unspecified person and the pet.

### SUMMARY

The present invention has been devised to solve the problems described above, and an object thereof is to implement a detection device that recognizes and detects the animal and the person from the still image or the moving image (hereinafter simply referred to as an image unless otherwise noted), a display control device and an imaging control device, which are provided with the detection device, a body detection method, a control program, and a recording medium.

In accordance with a first aspect of the present invention, a detection device includes: an animal detection part configured to detect an animal from a captured image; a person detection part configured to detect a person from the image; and a detection result output part configured to output a detection result including at least information indicating that a target body is detected when the animal detection part detects the animal from the image and the person detection part detects the person from the image.

According to the above configuration, the animal detection part recognizes and detects the animal when the animal is taken in the image that is the detection processing target. On the other hand, the person detection part recognizes and detects the person when the person is taken in the image.

The detection result output part outputs the detection result including at least the information indicating that the target body is detected when the animal detection part detects the animal from the image and the person detection part detects the person from the image.

As described above, the detection device, which recognizes both the animal and the person from the image and therefore determines that "the target body is detected", can be constructed.

When the image is processed by the detection device, whether both the animal and the person are detected from the image is determined from the detection result output by the detection device. Therefore, a structural element or a device on a usage side of the detection result can perform different pieces of processing based on whether both the animal and the person are detected.

The detection device of the first aspect may further include a pet determination part configured to determine whether the animal detected from the image by the animal detection part is a pet kept by a person, wherein the detection result output part outputs the detection result including the information indicating that the target body is detected when the animal determined to be the pet by the pet determination part is detected from the image and the person detection part detects the person from the image.

According to the above configuration, the animal detection part detects the animal from the image while the person detection part detects the person from the image. Additionally, the pet determination part determines whether at least one animal detected from the image is the pet. "The animal is the pet" means that "the animal is kept by a person".

The detection result output part outputs the detection result including at least the information indicating that the target body is detected when the animal and the person are detected and the detected animal is the pet. When the plural animals are detected, at least one animal may be determined to be the pet.

As described above, the detection device, which recognizes both the animal that is the pet and the person from the image and therefore determines that "the target body is detected", can be constructed.

When the image is processed by the detection device, whether both the pet and the person are detected from the image is determined from the detection result output by the detection device. Therefore, the structural element or the device on the usage side of the detection result can perform different pieces of processing based on whether both the pet and the person are detected. That is, the structural element or the device on the usage side of the detection result can further distinguish the case that the animal except the pet and the person are detected from the case that the pet and the person are detected. Therefore, the different pieces of processing can be performed according to deference in more detail situation to deal with a finer situation.

The detection device of the first aspect may further include an owner determination part configured to determine whether the person detected from the image by the person detection part is an owner who keeps an animal, wherein the detection result output part outputs the detection result including the information indicating that the target body is detected when the person determined to be the owner by the owner determination part is detected from the image and the animal detection part detects the animal from the image.

According to the above configuration, the animal detection part detects the animal from the image while the person detection part detects the person from the image. Additionally, the owner determination part determines whether at least one person detected from the image is the owner. "The person is the owner" means that "the person keeps the pet".

The detection result output part outputs the detection result including at least the information indicating that the target body is detected when the animal and the person are detected and when the detected person is the owner. When the plural persons are detected, at least one person may be determined to be the owner.

As described above, the detection device, which recognizes both the animal and the person that is the owner from the image and therefore determines that "the target body is detected", can be constructed.

When the image is processed by the detection device, whether both the animal and the owner are detected from the image is determined from the detection result output by the detection device. Therefore, the structural element or the device on the usage side of the detection result can perform different pieces of processing based on whether both the animal and the owner are detected. That is, the structural element or the device on the usage side of the detection result can further distinguish the case that the animal and the person except the owner are detected from the case that the animal and the owner are detected. Therefore, the different pieces of processing can be performed according to deference in more detail situation to deal with the finer situation.

The detection device of the first aspect may further include: a pet determination part configured to determine whether the animal detected from the image by the animal detection part is a pet kept by a person; and an owner determination part configured to determine whether the person detected from the image by the person detection part is an owner who keeps an animal, wherein the detection result output part outputs the detection result including the information indicating that the target body is detected when the animal determined to be the pet by the pet determination part is detected from the image and the person determined to be the owner by the owner determination part is detected from the image.

According to the above configuration, the animal detection part detects the animal from the image while the person detection part detects the person from the image. Additionally, the pet determination part determines whether at least one animal detected from the image is the pet. "The animal is the pet" means that "the animal is kept by the person". The owner determination part further determines whether at least one person detected from the image is the owner. "The person is the owner" means that "the person keeps the pet".

The detection result output part outputs the detection result including at least the information indicating that the target body is detected when the animal and the person are detected, when the detected animal is the pet, and when the detected person is the owner. When the plural animals are detected, at least one animal may be determined to be the pet. When the plural persons are detected, at least one person may be determined to be the owner.

As described above, the detection device, which recognizes both the animal that is the pet and the owner from the image and therefore determines that "the target body is detected", can be constructed.

When the image is processed by the detection device, whether both the pet and the owner are detected from the image is determined from the detection result output by the detection device. Therefore, the structural element or the device on the usage side of the detection result can perform different pieces of processing based on whether both the pet and the owner are detected. Even if the animal and the person are detected, the structural element or the device on the usage side of the detection result can further distinguish the case that the pet and the owner are not detected from the case that the pet and the owner are detected. Therefore, the different pieces of processing can be performed according to deference in more detail situation to deal with the finer situation. That is, the structural element or the device on the usage side of the detection result can perform optimum processing for the special situation that "the pet and the owner are detected".

In the detection device of the first aspect, the pet determination part may determine whether the animal is the pet by comparing feature quantity data, which is extracted from an animal region including the animal on the image and reflects a feature of the animal, to feature quantity data of a model that reflects one of a pet-looking feature and a not-pet-looking feature.

According to the above configuration, the pet determination part can determine that there is a high possibility that the animal is the pet as the animal feature quantity data is similar to or agrees with the feature quantity data of the pet-looking model, and the pet determination part can determine that there is a low possibility that the animal is the pet as the animal feature quantity data is similar to or agrees with the feature quantity data of the not-pet-looking model.

In the detection device of the first aspect, the owner determination part may determine whether the person is the owner by comparing feature quantity data, which is extracted from an person region including the person on the image and reflects a feature of the person, to feature quantity data of a model that reflects one of an owner-looking feature and a not-owner-looking feature.

According to the above configuration, the owner determination part can determine that there is a high possibility that the person is the owner as the person feature quantity data is similar to or agrees with the feature quantity data of the owner-looking model, and the owner determination part can determine that there is a low possibility that the person is the owner as the person feature quantity data is similar to or agrees with the feature quantity data of the not-owner-looking model.

In the detection device of the first aspect, the pet determination part may further determine an attribute of the animal determined to be the pet, and the detection result output part may add pet attribute information indicating the pet attribute determined by the pet determination part on the detection result.

According to the above configuration, the pet determination part further determines the attribute of the animal determined to be the pet, namely, the attribute of the pet in the detected animals.

The detection result output part adds the information indicating that the target body is detected on the detection result when the pet and the person are detected. Additionally, the detection result output part adds the information, which is determined by the pet determination part and indicates the attribute of the pet, namely the pet attribute information, on the detection result.

Therefore, the detection result including the information indicating that the target body is detected and the pet attribute information on the detected pet is output.

As described above, the detection device, which recognizes both the animal that is the pet and the person from the image and therefore determines that "the target body is detected", can be constructed. Additionally, the detection device can output the pet attribute information on the pet in the detected objective bodies.

When the image is processed by the detection device, whether both the pet and the person are detected from the image is determined from the detection result output by the detection device. What kind of a pet is detected (the attribute of the pet) is determined.

When both the pet and the person are detected, the structural element or the device on the usage side of the detection result can perform different pieces of processing based on what kind of a pet is detected. That is, the structural element or the device on the usage side of the detection result can distinguish the detected pets from each other, more particularly the attributes of the pets from each other. Therefore, according to the attribute of the pet, the different pieces of processing can be performed to deal with the finer situation.

In the detection device of the first aspect, the owner determination part may further determine the attribute of the person determined to be the owner. In this case, the detection result output part may add owner attribute information indicating the attribute of the owner determined by the owner determination part on the detection result.

According to the above configuration, the detection result including the information indicating that the target body is detected and the owner attribute information on the detected owner is output.

As described above, the detection device, which recognizes both the animal and the person that is the owner from the image and therefore determines that "the target body is detected", can be constructed. Additionally, the detection device can output the owner attribute information on the owner in the detected objective bodies.

When the image is processed by the detection device, what kind of an owner is determined (the attribute of the owner).

When both the animal (or the pet) and the owner are detected, the structural element or the device on the usage side of the detection result can perform different pieces of processing based on what kind of an owner is detected. That is, the structural element or the device on the usage side of the detection result can distinguish the detected owners from each other, more particularly the attributes of the owners from each other. Therefore, according to the attribute of the owner, the different pieces of processing can be performed to deal with the finer situation.

The detection device of the first aspect may further include a pairing part configured to pair the animal detected from the image by the animal detection part with the person detected from the image by the person detection part while correlating the animal with the person, wherein the detection result output part includes correspondence information indicating a correspondence relationship of the animal and the person, which are paired with each other by the pairing part, in the detection result.

According to the above configuration, the pairing part pairs the detected animal with the detected person while correlating the animal with the person. The detection result output part includes the correspondence information, in which the pairing part correlates the animal and the person with each other, in the detection result.

Accordingly, the detection device outputs the detection result including the information indicating that the target body is detected and the correspondence information.

When both the animal and the person are detected, based on the information on the pairing of the animal and the person, the structural element or the device on the usage side of the detection result can further perform various pieces of processing to the pair. The pairing of the animal and the person means a relationship in which the animal is kept by the person and a relationship in which the person keeps the animal.

That is, in consideration of the relationship between the detected animal and the detected person, the structural element or the device on the usage side of the detection result can perform different pieces of processing to deal with the finer situation.

In the detection device of the first aspect, the pairing part may pair the animal and the person, which are closest to each other, within the animals and the persons, which are detected from the image.

According to the above configuration, the animal and the person, which are located close to each other, are determined to be the pair, and the correspondence information indicating the pair is output while added on the detection result.

There is a high probability that the animal and the person, which have the pair relationship, are located close to each other. Therefore, the pairing part can accurately perform the pairing processing.

In the detection device of the first aspect, the pairing part may recognize a linear body connecting the animal and the person as a lead from the image, and pair the animal and the person, which are connected by the recognized lead, within the animals and the persons, which are detected from the image.

According to the above configuration, in the case that the animal and the person are connected through the lead (a cord, a chain, or a rein), the connected animal and person are determined to be the pair.

There is a high probability that the person having the pair relationship leads the animal while connecting the animal with the lead. Therefore, the pairing part can accurately perform the pairing processing.

The detection device of the first aspect may further include: a pet determination part configured to determine whether the animal detected from the image by the animal detection part is a pet kept by a person; and an owner determination part configured to determine whether the person detected from the image by the person detection part is an owner who keeps an animal, wherein the pairing part pairs the animal determined to be the pet with the person determined to be the owner within the animals and the persons, which are detected from the image.

According to the above configuration, the pairing part pairs the animal determined to be the pet with the person determined to be the owner.

As described above, the pairing of the animal and the person means the relationship in which the animal is kept by the person and the relationship in which the person keeps the animal. That is, the animal paired with the person is the pet, and the person paired with the animal is the owner.

The pairing part avoids the mistaken pairing of the animal that is not the pet and the person or the pet and the person who is not the owner. Therefore, the pairing part can accurately perform the pairing processing.

In accordance with a second aspect of the present invention, a display control device includes a display controller configured to control a display part in response to the detection result output from the detection device of the first aspect, wherein the image is an image in which a body located in a position where the display part can visually be recognized is captured, and the display controller displays a pet-related image related to the pet on the display part when the detection result includes the information indicating that the target body is detected.

Therefore, the display control device on the usage side of the detection result output from the detection device is constructed.

According to the above configuration, the display control device can perform different pieces of display control processing based on whether both the animal and the person are detected. Specifically, when both the animal and the person are detected, the display control device can display the pet-related image related to the pet on the display part. The detection of both the animal and the person from the image means that the person who stands by the animal is located in the position where the person can visually recognize the display.

There is a high probability that the person who stands by the animal has an interest in the pet-related image displayed on the display part, and the probability that persons around the display part pay attention to the pet-related image is increased in the case that the pet-related image is displayed on the display part.

In accordance with another second aspect of the present invention, a display control device includes a display controller that controls a display part in response to the detection result output from the detection device of the first aspect, wherein the image may be an image in which a body located in a position where the display part can visually be recognized is captured, and the display controller may display a pet-related image corresponding to the pet attribute in the pet-related image on the display part in response to the pet attribute information included in the detection result.

According to the above configuration, the display control device can perform different pieces of display control processing based on whether the pet and the person are detected and based on what kind of a pet is detected (pet attribute information).

More particularly, in the case that the pet and the person are detected, the display controller displays the pet-related image corresponding to the pet attribute in the pet-related images in consideration of the pet attribute information.

It is considered that the person who stands by the pet has a particular interest in the pet-related image corresponding to the pet attribute. Therefore, the probability that persons around the display part have an interest in the pet-related image is increased in the case that the pet-related image corresponding to the pet attribute is displayed on the display part.

In accordance with a third aspect of the present invention, an imaging control device includes an imaging controller configured to control a camera in response to the detection result output from the detection device of the first aspect, wherein the image is a live view image captured by the camera, the imaging controller specifies the pair of the animal and the person, which is indicated by the correspondence information included in the detection result, as an objective subject, and the imaging controller controls the camera such that the image of the objective subject is clearly captured.

Therefore, the imaging control device on the usage side of the detection result output from the detection device is constructed.

According to the above configuration, when the animal and the person are detected, the imaging control device considers whether the detected objective bodies are the pair, namely, whether the relationship between the animal kept by the person and the person who keeps the animal holds. When the objective bodies are the pair, the imaging control device specifies the objective bodies (the animal and the person) as the objective subject to be captured.

The imaging control device can control the camera such that the objective subject is distinguished from other backgrounds to clearly capture the image of the objective subject.

In accordance with a fourth aspect of the present invention, a body detection method includes the steps of: detecting an animal from a captured image; detecting a person from the image; and outputting a detection result including at least information indicating that an target body is detected when the animal is detected from the image in the animal detection step and the person is detected from the image in the person detection step.

The detection device may be constructed by a computer. In this case, the present invention includes a control program of the detection device, which operates the computer as each part of the detection device to construct the detection device, and a computer-readable recording medium in which the control program is recorded. The present invention also includes a control program of the display control device, which operates the computer as each part of the display control device to construct the display control device, and a computer-readable recording medium in which the control program is recorded. The present invention also includes a control program of the imaging control device, which operates the computer as each part of the imaging control device to construct the imaging control device, and a computer-readable recording medium in which the control program is recorded.

In accordance with the first aspect of the present invention, a detection device includes: an animal detection part that detects an animal from a captured image; a person detection part that detects a person from the image; and a detection result output part that outputs a detection result including at least information indicating that an target body is detected when the animal detection part detects the animal from the image and when the person detection part detects the person from the image.

In accordance with the fourth aspect of the present invention, a body detection method includes the step of: detecting an animal from a captured image; detecting a person from the image; and outputting a detection result including at least information indicating that an target body is detected when the animal is detected from the image in the animal detection step and when the person is detected from the image in the person detection step.

Accordingly, the present invention can construct the detection device, which recognizes the animal and the person from the image and therefore determines that "the target body is detected".

### BRIEF DESCRIPTION OF THE DRAWINGS

FIG. 1 is a block diagram illustrating configurations of main portions of a detection device and a display control device in a display device according to a first embodiment of the present invention;
FIG. 2 is a view illustrating a usage scene and a schematic configuration of the display device of the first embodiment;
FIGS. 3A to 3D are views illustrating a specific example of an image (input image), which is a body detection processing target and input from an image input part of the detection device to an animal detector and a person detector.
FIGS. 4A to 4D are views illustrating a state in which, in each of the input images, an animal region and a person region are specified through the body detection processing using the animal detector and the person detector of the detection device;
FIG. 5 is a view illustrating a specific example of an operation of a detection result output part of the detection device;
FIG. 6 is a view illustrating an example of a display rule stored in a display rule storage part of the display control device;
FIG. 7 is a view illustrating an example of a display screen of a display part in displaying an advertisement corresponding to the case that "animal + person" does not exist around the display device;
FIG. 8 is a view illustrating an example of the display screen of the display part when pet-related advertisement is displayed while "animal + person" exists around the display device;
FIG. 9 is a flowchart illustrating a processing flow in the display device of the first embodiment;
FIG. 10 is a view illustrating a configuration of a main portion of a detection device according to a modification of the first embodiment;
FIG. 11A is a view illustrating a specific example of detection result identification information generated by a detection result output part of the detection device in the modification, and FIG. 11B is a view illustrating a specific example of a display rule referred to by a display controller of a display control device in the modification;
FIG. 12 is a block diagram illustrating configurations of main portions of a detection device and a display control device in a display device according to a second embodiment of the present invention;
FIG. 13 is a block diagram illustrating configurations of main portions of a pet determination part and an animal feature quantity storage part of the detection device;
FIG. 14 is a flowchart illustrating a processing flow in the display device of the second embodiment;
FIG. 15 is a block diagram illustrating configurations of main portions of a detection device and a display control device in a display device according to a third embodiment of the present invention;
FIG. 16 is a block diagram illustrating configurations of main portions of an owner determination part and a person feature quantity storage part of the detection device;
FIG. 17 is a flowchart illustrating a processing flow in the display device of the third embodiment;
FIG. 18 is a block diagram illustrating configurations of main portions of a detection device and a display control device in a display device according to a fourth embodiment of the present invention;
FIG. 19 is a flowchart illustrating a processing flow in the display device of the fourth embodiment;
FIG. 20 is a view illustrating a state in which, in an input image at a time point at which an image is captured by an imaging part, an animal region and a person region are specified through body detection processing using an animal detector and a person detector;
FIG. 21 is a view illustrating a specific example of an operation of a detection result output part of a detection device, and an example of pet attribute information generated by the detection result output part;
FIG. 22 is a view illustrating another example of a display rule stored in a display rule storage part of a display control device;
FIG. 23 is a block diagram illustrating configurations of main portions of a detection device and an imaging control device in a digital camera according to a sixth embodiment of the present invention;
FIGS. 24A and 24B are views illustrating a state in which an animal region and a person region are paired through pairing processing performed by a pairing part of the detection device in an input image in which the animal region and the person region are specified; and
FIG. 25 is a view illustrating a usage scene of the digital camera of the sixth embodiment.

### DETAILED DESCRIPTION

### First Embodiment

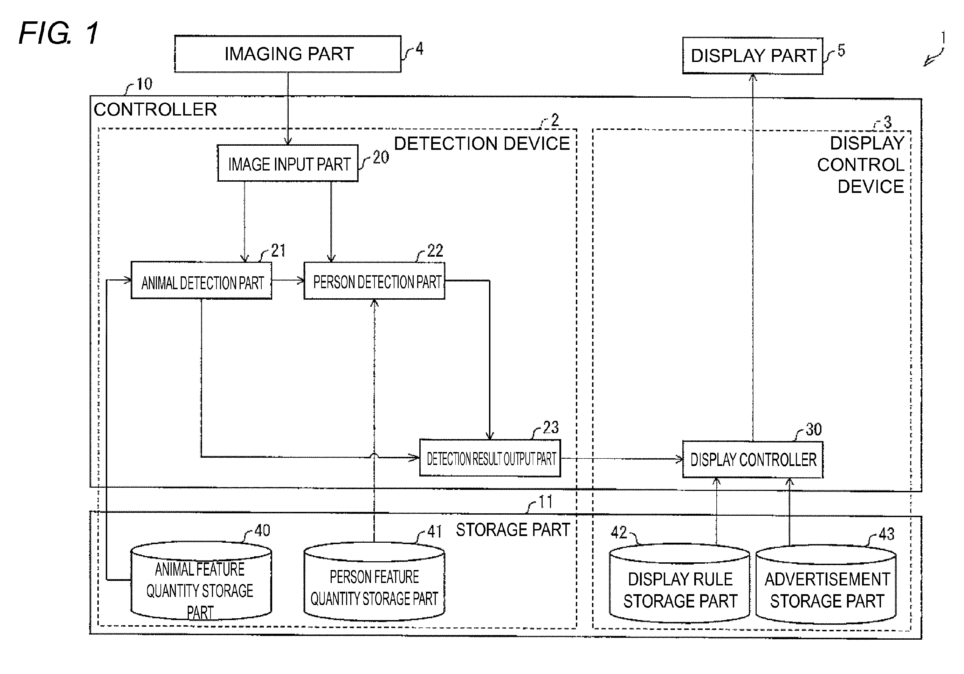

A first embodiment of the present invention will be described below with reference to FIGS. 1 to 11.

A detection device of the first embodiment of the present invention is applied to a display device.

### [Outline of Display Device]

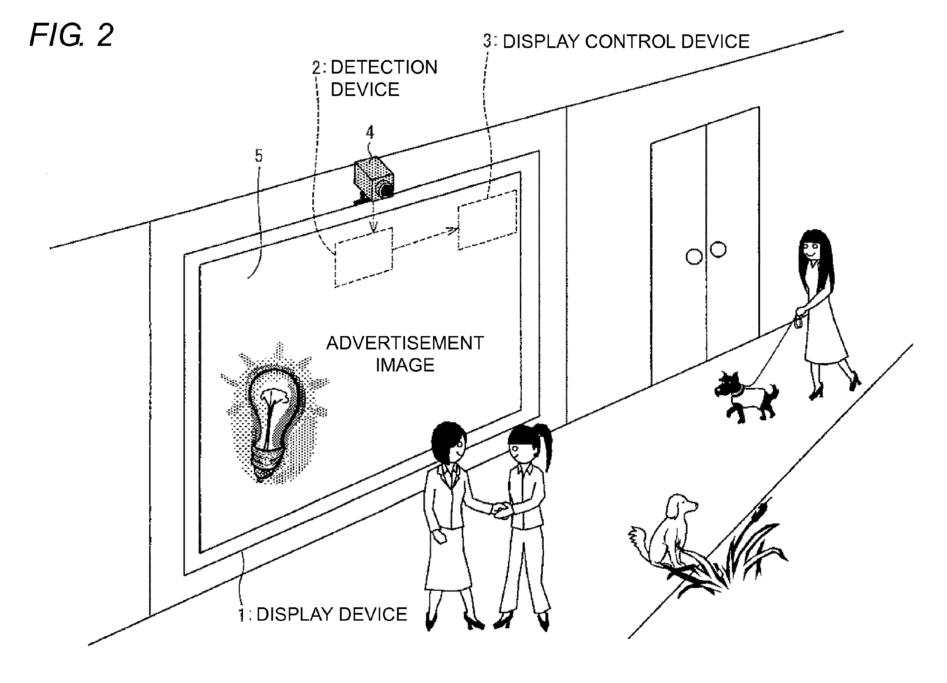

FIG. 2 is a view illustrating a usage scene and a schematic configuration of the display device of the first embodiment.

In the first embodiment, by way of example, a display device 1 is a digital signage that is installed on a street in which the general public comes and goes. The display device 1 includes a display part 5 (such as a liquid crystal display, a plasma display, an EL display, an organic EL display, an LED display, and a projector). The display device 1 displays an advertisement image that is electronic data (including a still image, a moving image, and a sound) on the display part 5 such that the general public visually recognizes the advertisement image.

The display device 1 also includes a detection device 2, a display control device 3, and an imaging part 4.

The imaging part 4 captures the still image or the moving image, and supplies the still image or the moving image to the detection device 2. In order to be able to capture the image of the person located in a position where the person visually recognizes the advertisement displayed on the display part 5, desirably the imaging part 4 is installed in a proper position while an angle of view of the imaging part 4 is adjusted.

The detection device 2 processes the image supplied from the imaging part 4, and recognizes and detects the specific body. In the first embodiment, the detection device 2 detects the person and an animal from the image.

The display control device 3 controls the display of the display device 1 in response to the detection result of the detection device 2.

That is, in the display device 1 of the first embodiment, the detection device 2 detects the person located in the position where the person visually recognizes the advertisement and the animal located around the person, and the display control device 3 controls the advertisement image displayed on the display part 5 in response to the detection result.

Therefore, the display device 1 can switch the displayed advertisement image based on what exists in the position where the person visually recognizes the advertisement.

A detailed configurations of the display device 1 (the detection device 2 and the display control device 3) will be described with reference to FIG. 1.

### [Configuration of Display Device]

FIG. 1 is a block diagram illustrating configurations of main portions of the detection device 2 and the display control device 3 in the display device 1 of the first embodiment. As illustrated in FIG. 1, the display device 1 mainly includes the imaging part 4, the display part 5, a controller 10, and a storage part 11 as a hardware configuration. Although not illustrated, the display device 1 may further include a communication part. In this case, the display device 1 is connected to an external device through a network by the communication part, and the display device 1 can display the advertisement image according to a command from the external device or receive the advertisement image to be displayed from the external device.

As described above, the imaging part 4 captures the image around the display device 1 to obtain the still image or the moving image. For example, the imaging part 4 is constructed by a CCD (Charge Coupled Devices) camera or a CMOS (Complementary Metal-Oxide-Semiconductor) camera. Alternatively, another imaging device may be used as the imaging part 4. The still image or the moving image, which is captured by the imaging part 4, is supplied to the detection device 2 mounted on the display device 1.

As described above, the display part 5 is used to display the advertisement image. For example, the display part 5 is constructed by an LCD (Liquid Crystal Display).

(1) A control program executed by the controller 10, (2) an OS program, (3) an application program executed to implement various functions of the display device 1 by the controller 10, and (4) various pieces of data read to execute the application program are stored in the storage part 11. Additionally, (5) data, which is used in calculation while the controller 10 performs the functions, and a calculation result are stored in the storage part 11. For example, the pieces of data (1) to (4) are stored in nonvolatile storage devices, such as a ROM (Read Only Memory), a flash memory, an EPROM (Erasable Programmable ROM), an EEPROM (Electrically EPROM), and an NVRAM (Non-Volatile Random Access Memory). For example, the data (5) is stored in volatile storage devices, such as a RAM (Random Access Memory). For example, the kind of a storage device used to store the data is properly decided by an intended use, convenience, a cost, and a physical restriction of the display device 1.

The controller 10 totally controls parts included in the display device 1. For example, the controller 10 is constructed by a CPU (Central Processing Unit), and the functions of the display device 1 are implemented such that the CPU that is the controller 10 reads the program stored in the ROM on the RAM and executes the program.

At least various programs and pieces of data are stored in the storage part 11 in order to implement a body detection function performed by the detection device 2 mounted on the display device 1. Specifically, the storage part 11 includes an animal feature quantity storage part 40 and a person feature quantity storage part 41.

The controller 10 includes an image input part 20, an animal detector 21, a person detector 22, and a detection result output part 23 as functional blocks. The functional blocks express a software configuration that acts as the detection device 2 in the display device 1.

In the first embodiment, various programs and pieces of data may further be stored in the storage part 11 in order to implement an advertisement control function performed by the display control device 3 mounted on the display device 1. Specifically, the storage part 11 includes a display rule storage part 42 and an advertisement storage part 43.

The controller 10 may further include a display controller 30 as a functional block. The display controller 30 that is the functional block expresses the software configuration that acts as the display control device 3 in the display device 1.

Each functional block of the controller 10 can be implemented such that the CPU reads a program for data management function stored in the storage device (storage part 11) constructed by the ROM and the NVRAM on the RAM (not illustrated) and executes the program.

The image input part 20 acquires the image that becomes a body detection processing target from the images (the still images or the moving images) captured by the imaging part 4, and the image input part 20 inputs the acquired image to the animal detector 21 and the person detector 22. The image input part 20 may sequentially supply frames constituting the moving image to the animal detector 21 and the person detector 22. Alternatively, in the case that the body detection processing is hardly performed to all the frames of the moving image due to a problem with a load, the image input part 20 may supply frames to the animal detector 21 and the person detector 22 while frames are thinned at predetermined intervals of pictures or predetermined intervals of seconds. There is no particular limitation to timing in which the image input part 20 inputs the image. However, because a situation around the display device 1 on the street changes from moment to moment, it is necessary for the display device 1 to correspond to the change to correctly recognize the situation. Therefore, preferably the image input part 20 inputs the image captured by the imaging part 4 to the animal detector 21 and the person detector 22 in real time.

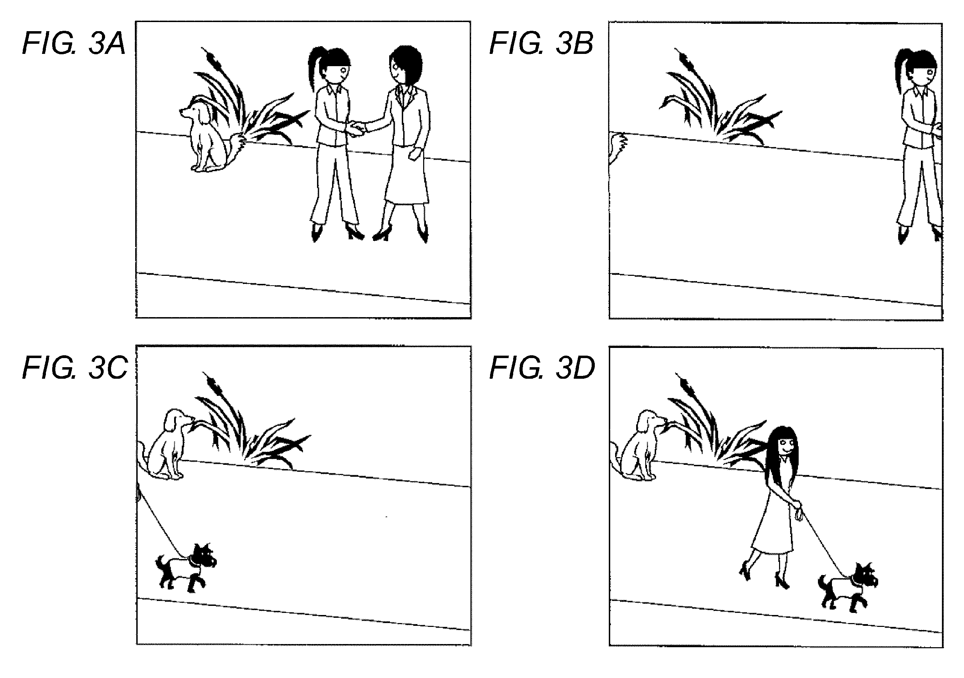

For example, in the images captured by the imaging part 4, the image input part 20 supplies the images illustrated in FIGS. 3A to 3D to the animal detector 21 and the person detector 22. FIGS. 3A to 3D are views illustrating a specific example of the image, which is the body detection processing target and input from the image input part 20 to the animal detector 21 and the person detector 22. The body detection processing means processing of recognizing and detecting a predetermined object from an image. The body detection processing includes animal detection processing performed by the animal detector 21 and person detection processing performed by the person detector 22.

In the case that the animal is taken in the image, which is input through the image input part 20 to become the body detection processing target, the animal detector 21 detects the animal. As used herein, the animal means living things except a human. The animal detector 21 scans the input image based on the feature quantity data, which is stored in the animal feature quantity storage part 40 and reflects an animal feature. That is, the animal detector 21 compares the animal feature quantity data to the feature quantity data extracted from the image. As a result of comparison, in the case that the animal feature quantity data agrees with the feature quantity data extracted from the image or in the case that a region having a high degree of similarity can be specified, the animal detector 21 detects the body taken in the region as the animal.

There is no particular limitation to a content of the feature quantity data stored in the animal feature quantity storage part 40. However, a color and a shape depend on an animal breed. Therefore, in order to more correctly detect the animal, preferably the feature quantity data that becomes a model reflecting the animal feature is prepared in each breed of the assumed animal. For example, in order to detect the animal, which is considered to act coordination with the human as a pet kept by the human (in this case, the animal goes out of doors), or the animal, which is considered to be carried (a dog, a cat, a bird, a bug, or other small animals), it is conceivable that the feature quantity data for each animal is stored in the animal feature quantity storage part 40.

The feature quantity data may be the image or any information extracted from the image through predetermined image processing. For example, the feature quantity data may be color information indicating the characteristic color of the animal, shape information indicating the characteristic shape of the animal, size information indicating the size of the animal with respect to the size of the human, or composite data including the plural pieces of information.

For example, the shape and size of the animal are extracted from the image through well-known image processing (such as edge detection processing).

The person detector 22 detects the person taken in the image, which is input through the image input part 20 to become the body detection processing target. The person detector 22 scans the input image based on the feature quantity data, which is stored in the person feature quantity storage part 41 and reflects a human feature. That is, the person detector 22 compares the human feature quantity data to the feature quantity data extracted from the image.

There is no particular limitation to a content of the feature quantity data stored in the person feature quantity storage part 41. However, in order to detect the human, preferably information indicating the significant feature, which is easily distinguished from that of the animal and common to all races, is included in the feature quantity data.

For example, the human feature quantity data may be the shape information indicating the shape of a human body, human face model information indicating a positional relationship among a brow, eyes, a nose, and a mouth, or composite data including the pieces of information. For example, the human face and the shape of the human body are extracted from the image through the well-known image processing (such as the edge detection processing).

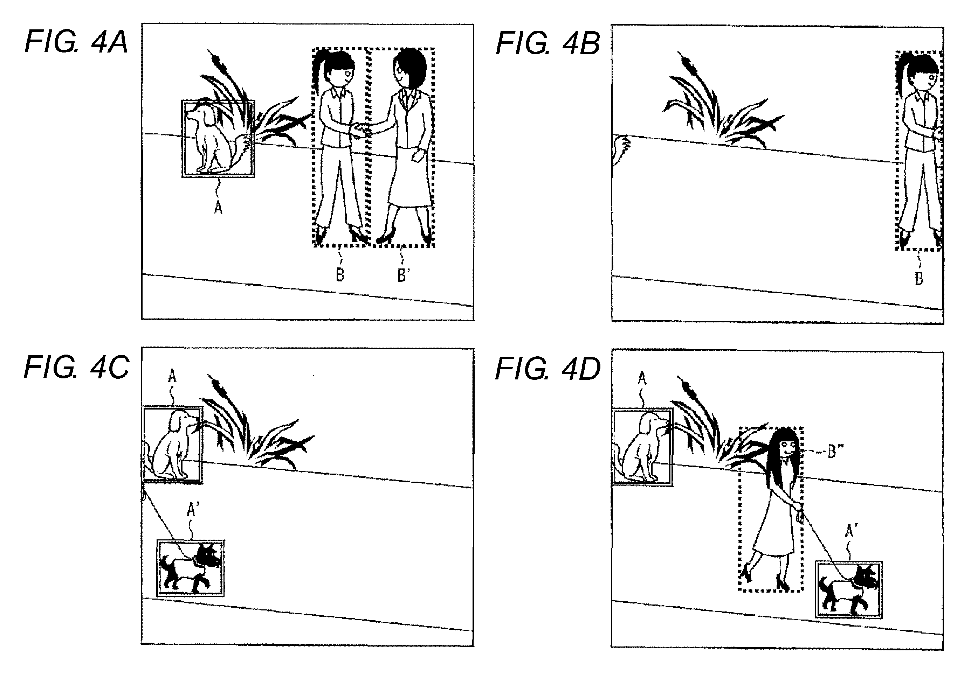

For example, as illustrated in FIGS. 4A to 4D, the animal detector 21 and the person detector 22 specify regions where the animal and the person are detected with respect to the input images in FIGS. 3A to 3D. FIGS. 4A to 4D are views illustrating a state in which, in each of the input images in FIGS. 3A to 3D, the animal region and the person region are specified through the body detection processing using the animal detector 21 and the person detector 22.

As illustrated in FIG. 4A, the animal detector 21 scans the input image in FIG. 3A to specify the region (surrounded by a double-line frame) where the animal (in this case, the dog) is taken. On the other hand, as illustrated in FIG. 4A, the person detector 22 scans the input image in FIG. 3A to specify the region (surrounded by a broken-line frame) where the person is taken.

In the example in FIG. 4A, the animal detector 21 specifies a circumscribed rectangle for a complicated shape assumed to be the dog as the animal region (surrounded by the double-line frame) where the animal is detected. On the other hand, the person detector 22 specifies a circumscribed rectangle for a complicated shape assumed to be the human as the person region (surrounded by the broken-line frame) where the person is detected. Because two persons are taken in the input image in FIG. 3A, the person detector 22 can specify the person regions for the recognized respective persons as illustrated in FIG. 4A.

However, the method for specifying the body region using the animal detector 21 and the person detector 22 is not limited to the example in FIG. 4A. The animal detector 21 and the person detector 22 may specify not the circumscribed rectangle but the complicated shape as the animal region and the person region, or the animal detector 21 and the person detector 22 may specify a circle, an ellipse, or another geometric shape, which includes the complicated shape, as the animal region and the person region.

As illustrated in FIGS. 4B to 4D, the animal detector 21 and the person detector 22 perform the body detection processing to the input images in FIGS. 3B to 3D to specify the animal region and the person region.

The detection result output part 23 generates and outputs detection result data based on whether the animal detector 21 detects the animal and whether the person detector 22 detects the person.

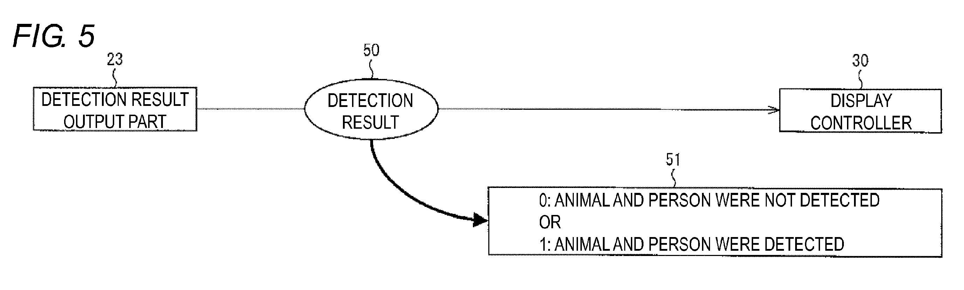

FIG. 5 is a view illustrating a specific example of an operation of the detection result output part 23.

In the first embodiment, the detection device 2 is intended to detect "at least one animal and at least one person" from one image. That is, it is said that the body detected by the detection device 2 is "the animal and the person".

Therefore, in the first embodiment, as illustrated in FIG. 5, the detection result output part 23 generates and outputs a detection result 50 including at least detection result identification information 51, and the detection result identification information 51 indicates one of first identification information meaning that the target body is detected and second identification information meaning that the target body is not detected. In the example in FIG. 5, the first identification information is identification information of "1" indicating that the target body, namely, both the animal and the person are detected. The second identification information is identification information of "0" indicating that one of the animal and the person is not detected or that both the animal and the person are not detected.

The detection result 50 and the data structure of the detection result identification information 51 are illustrated in FIG. 5 by way of example. The content of the detection result 50 generated by the detection result output part 23 is not limited to the example in FIG. 5.

In the first embodiment, detection result 50 generated by the detection result output part 23 is supplied to the display controller 30. Therefore, the display controller 30 can perform the display control of the advertisement image based on the detection result 50.

The display controller 30 performs the display control of the display part 5 according to the detection result 50 output from the detection result output part 23. More specifically, based on the detection result identification information 51 included in the detection result 50, the display controller 30 specifies the advertisement image corresponding to the detection result identification information 51 according to a display rule stored in the display rule storage part 42. The display controller 30 controls the display part 5 such that the specified advertisement image is displayed on the display part 5.

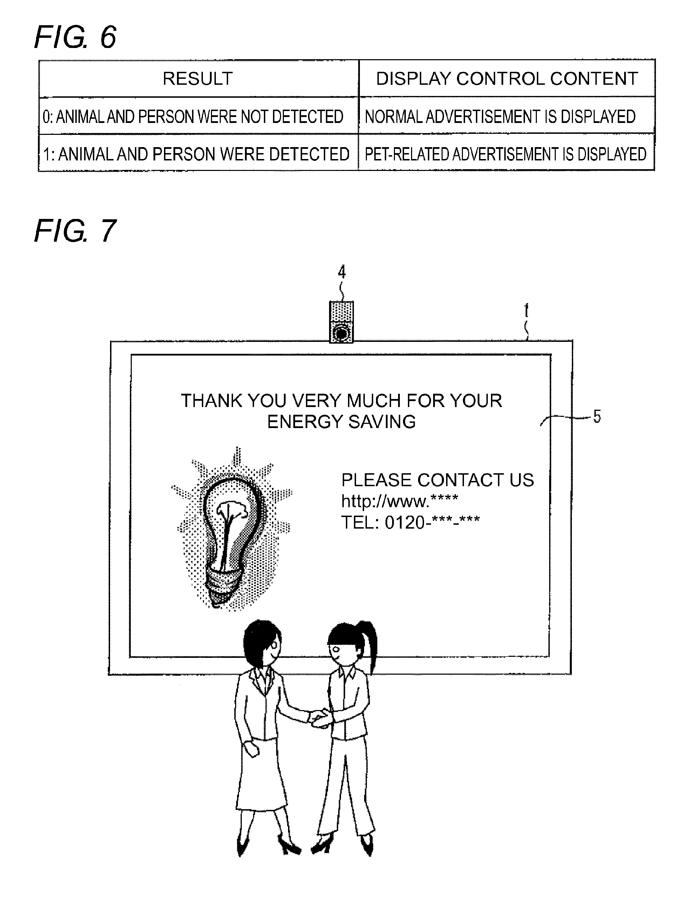

FIG. 6 is a view illustrating an example of a display rule stored in the display rule storage part 42.

As illustrated in FIG. 6, in a table of the display rule, the advertisement image is correlated with identification information (for example, detection result identification information 51) on the detection result generated by the detection result output part 23.

Specifically, a normal advertisement image (a normal advertisement), which is not specialized in a category of the pet but put out to a large indefinite number of viewers, is correlated with the identification information of "0", namely, the case that "the animal and the person" are not detected. An advertisement image (pet-related advertisement), which is specialized in the category of the pet and put out to a viewer having an interest in the pet, is correlated with the identification information of "1", namely, the case that "the animal and the person" are detected.

The display controller 30 reads the advertisement image, which is specified according to the display rule stored in the display rule storage part 42, from the advertisement storage part 43, and the display controller 30 outputs a video signal (and a sound signal) of the advertisement image to the display part 5 and displays the advertisement corresponding to the detection result.

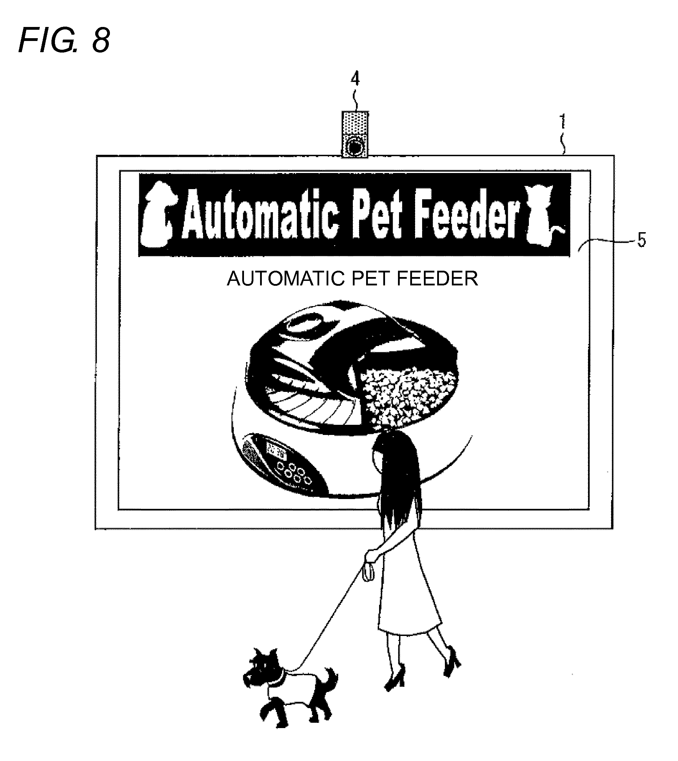

Specifically, according to the display rule, the display controller 30 can display the normal advertisement on the display part 5 (FIG. 7) in the case that the target body, namely, "the animal and the person" do not exist in the position around the display device 1, where the advertisement can visually be recognized, and the display controller 30 can display the pet-related advertisement (pet-related image) on the display part 5 (FIG. 8) in the case that "the animal and the person" exist around the display device 1. FIG. 7 is a view illustrating an example of the display screen of the display part 5 when the normal advertisement is displayed while "the animal and the person" do not exist around the display device 1, and FIG. 8 is a view illustrating an example of the display screen of the display part 5 when the pet-related advertisement is displayed while "the animal and the person" exist around the display device 1.

All the advertisement images that are put out to the viewers by the display device 1 are stored in the advertisement storage part 43. An advertisement ID may be provided to the advertisement image such that the advertisement image can uniquely be distinguished, or a category ID indicating the previously-defined category may be provided according to the content, the purpose, and the target of the advertisement.

For example, the advertisement image of a commercial product (pet feeder) for feeding the pet is stored in the advertisement storage part 43 while the advertisement ID uniquely identifying the advertisement image and the category ID indicating that the advertisement image belongs to the pet-related advertisement are correlated with each other.

In the display rule, the identification information on the detection result may be correlated with the advertisement ID uniquely identifying the advertisement image or the category ID indicating the category to which the advertisement belongs.

For example, in the case that the advertisement ID specifying the advertisement of the pet feeder is correlated with the identification information of "1", the display controller 30 controls the display part 5 such that the advertisement of the pet feeder is displayed while "the animal and the person" exist. In the case that the category ID of the pet-related advertisement is correlated with the identification information of "1", the display controller 30 controls the display part 5 such that all the advertisements correlated with the category ID of the pet-related advertisement and including the advertisement of the pet feeder are sequentially displayed while "the animal and the person" exist.

The sound data may be output along with the advertisement such that the viewers pay more attention while the advertisement is displayed (for example, the sound data of "automatic pet feeder! automatically feeding the pet in good time" is output at a volume enough to be audible to the persons around the display device 1 while the advertisement of the pet feeder in FIG. 8 is displayed).

Alternatively, the display device 1 may include a smell generator in addition to the display part 5 and the sound output part. In this case, smell data is stored while correlated with the advertisement image, the smell generator may generate a smell assigned by the smell data around the display device 1 while the advertisement image is displayed. Desirably the small, which is generated while correlated with the advertisement image, is correlated with the content of the advertisement image. Particularly, preferably each advertisement image of the pet-related advertisement is correlated with the smell that can attract the attention of the animal (or the pet).

According to the above configuration, the smell that can attract the attention of the animal can be generated around the display device 1 while the pet-related advertisement is displayed. Therefore, it is expected that the animal detected around the display device 1 is attracted to the smell to approach the display part 5 of the display device 1. When the animal (pet) takes action, an owner who leads the animal can surely be aware of the display content (that is, the pet-related advertisement) of the display part 5.

According to the display rule in FIG. 6, the display device 1 is configured such that some sort of advertisement image are always displayed on the display part 5 irrespective of the detection of the target body. However, the display rule is not limited to the example in FIG. 6. For example, the identification information of "0" may not be correlated with any advertisement image. That is, the identification information of "0" may be correlated with the operation that "the advertisement is not displayed". According to the display rule, while "the animal and the person" do not exist in the position around the display device 1, where the person can visually recognize the advertisement, the display controller 30 does not display any advertisement on the display part 5, but a backlight of the display part 5 can be turned off, or put the display part 5 into a waiting state to maintain the display part 5 in an energy saving mode.

It is not always necessary that the advertisement storage part 43 be locally stored in the storage part 11 of the display device 1. In the case that the advertisement storage part 43 is provided in the external device, the display controller 30 may make a request of the advertisement image specified through the communication part (not illustrated) to the external device, and display the advertisement image received from the external device on the display part 5.

In FIG. 6, the display rule is illustrated in the data structure of the table form by way of example. There is no limitation to the data structure of the display rule. When the display controller 30 can recognize a correspondence relationship between the identification information on the detection result output from the detection result output part 23 and the advertisement image to be selected, the display rule may be constructed by any data structure. The same holds true for the following embodiments.

### [Processing Flow of Display Device]

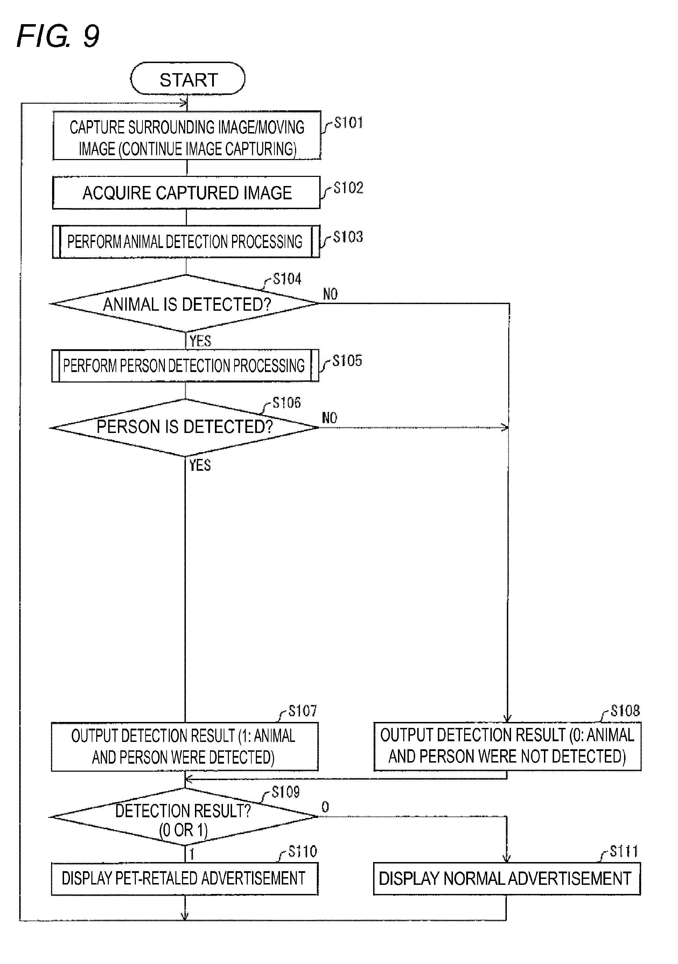

FIG. 9 is a flowchart illustrating a processing flow in the display device 1 of the first embodiment.

The imaging part 4 captures the image around the display device 1 (S101). The imaging part 4 may capture either the still image or the moving image. In this case, it is assumed that the imaging part 4 captures the moving image. It is assumed that the live view image captured by the imaging part 4 is sequentially stored in a temporary storage part (not illustrated) and supplied to the detection device 2 of the display device 1 through the temporary storage part.

In the detection device 2, the image input part 20 acquires the image that is subject to the body (animal or person) detection processing from the temporary storage part under a predetermined condition (in each frame, each several frames, or each several seconds) (S102). The image input part 20 supplies the acquired image as the input image to the animal detector 21 or the person detector 22.

The animal detector 21 performs the animal detection processing to the input image received from the image input part 20 (S103). As described above, the animal detection processing is the processing of detecting the animal taken in the input image. More particularly, the animal detector 21 specifies the region that agrees with the animal feature quantity data or the region having the high degree of similarity from the whole region of the input image based on the animal feature quantity data stored in the animal feature quantity storage part 40. The animal detector 21 transmits whether the animal region is specified to the detection result output part 23. As illustrated in FIGS. 4A to 4D, the animal detector 21 may transmit information defining the specified animal region to the detection result output part 23.

When the animal is not detected (NO in S104), the detection result output part 23 may generate the detection result identification information 51 indicating that "the animal and the person are not detected" and output the detection result 50 including the detection result identification information 51 (S108).

On the other hand, when the animal is detected (YES in S104), the person detector 22 performs the person detection processing to the input image received from the image input part 20 (S105). As described above, the person detection processing is processing of detecting the person taken in the input image. More particularly, the person detector 22 specifies the region that agrees with the person feature quantity data or the region having the high degree of similarity from the whole region of the input image based on the person feature quantity data stored in the person feature quantity storage part 41. The person detector 22 transmits whether the person region is specified to the detection result output part 23. As illustrated in FIGS. 4A to 4D, the person detector 22 may transmit information defining the specified person region to the detection result output part 23.

When the person is not detected (NO in S106), the detection result output part 23 may generate the detection result identification information 51 indicating that "the animal and the person are not detected" and output the detection result 50 including the detection result identification information 51 (S108).

On the other hand, when the person is detected (YES in S106), namely, when the animal is detected in S104 and when the person is detected in S106, the detection result output part 23 generates the detection result identification information 51 indicating that "the animal and the person are detected" and outputs the detection result 50 including the detection result identification information 51 (S107).

The detection result 50 output in S107 or S108 is supplied to the display controller 30.

In the display control device 3, the display controller 30 specifies the advertisement image corresponding to the detection result identification information 51 based on the detection result identification information 51 that is included in the detection result 50 supplied from the detection result output part 23.

Specifically, in the case that the detection result identification information 51 is the identification information of "1" indicating that "the animal and the person are detected" ("1" in S109), the display controller 30 specifies the advertisement image to be displayed as "the advertisement belonging to the pet-related advertisement "according to the display rule (for example, FIG. 6) stored in the display rule storage part 42.

The display controller 30 reads at least one advertisement image correlated with the category ID of the pet-related advertisement from the advertisement storage part 43 and displays the pet-related advertisement on the display part 5 (S110).

On the other hand, in the case that the detection result identification information 51 is the identification information of "0" indicating that "the animal and the person are not detected" ("0" in S109), the display controller 30 specifies the advertisement image to be displayed as "the advertisement belonging to the normal advertisement "according to the display rule.

The display controller 30 reads at least one advertisement image correlated with the category ID of the normal advertisement or at least one advertisement image that is not correlated with any category ID from the advertisement storage part 43 and displays the normal advertisement on the display part 5 (S111).

The imaging processing performed by the imaging part 4 and the body detection processing performed by the detection device 2 may be continued unless a processing ending instruction is input from the outside to the display device 1. As a result of repetition of the body detection processing, in the case that the detection result is identical to that of the preceding time, the display controller 30 may continuously display the identical advertisement or the advertisement of the identical category. On the other hand, in the case that the detection result is changed from the preceding time, the display controller 30 may switch the display such that another advertisement corresponding to the new detection result or an advertisement of another category is displayed.

For example, in the case that the person who walks the dog comes close to the display device 1 after the display controller 30 displays the normal advertisement in FIG. 7 on the display part 5 because "the animal and the person" are not detected, the display controller 30 switches the display of the display part 5 from the normal advertisement in FIG. 7 to the pet-related advertisement in FIG. 8 because "the animal and the person" are detected.

In the processing flow in FIG. 9, the animal detector 21 performs the animal detection processing, and then the person detector 22 performs the person detection processing when the animal is detected. However, the processing sequence performed by the display device 1 is not limited to the example in FIG. 9. For example, the sequences of the processing performed by the animal detector 21 and the processing performed by the person detector 22 can be switched.

According to the above configuration and method, the animal detector 21 recognizes and detects the animal (region) when the animal is taken in the input image. On the other hand, the person detector 22 recognizes and detects the person (region) when the person is taken in the input image.

The detection result output part 23 outputs the detection result indicating that the target body is detected when the animal detector 21 detects the animal and when the person detector 22 detects the person.

The detection result output from the detection result output part 23 is supplied to each part (for example, the display controller 30) that uses the detection result.

Accordingly, the detection device, which recognizes the animal and the person and therefore determines that "the target body is detected", can be constructed.

As a result, the structural element or the device (for example, the display controller 30) on the usage side of the detection result can perform different pieces of processing based on whether both the animal and the person are detected.

For example, the display controller 30 can control the display part 5 such that the pet-related advertisement is displayed during the scenes in FIGS. 4A and 4D in the scenes in FIGS. 4A to 4D.

### First Modification

In the configuration of the first embodiment, the animal detector 21 and the person detector 22 sequentially perform the body detection processing to detect the target body (the animal and the person). However, the configuration of the detection device 2 of the present invention is not limited to the configuration of the first embodiment. For example, the target body (the animal and the person) may be detected by the following configuration.

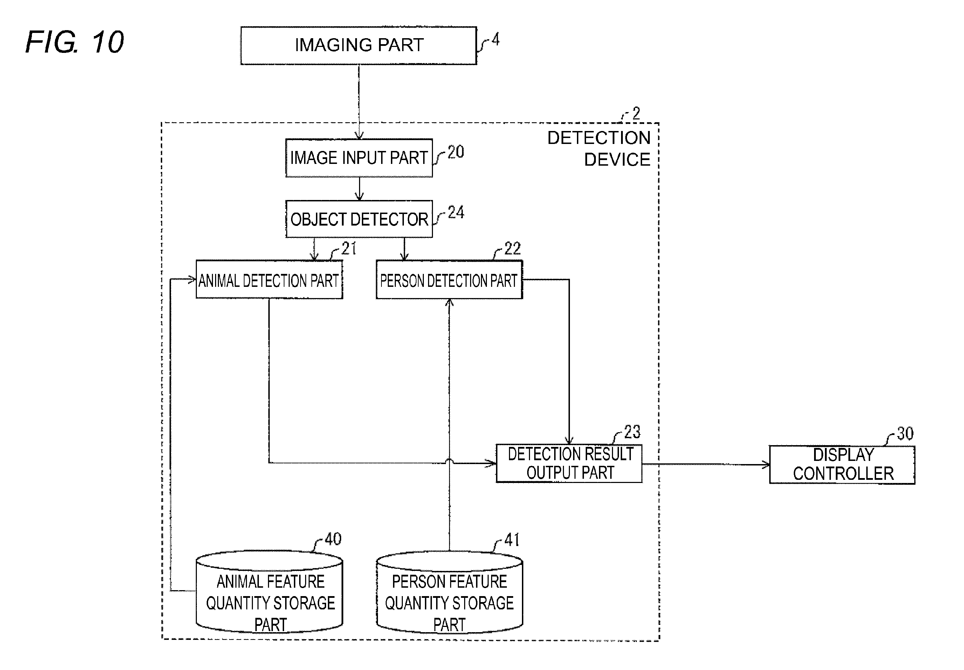

FIG. 10 is a view illustrating a configuration of a main portion of a detection device 2 according to a first modification. In the following drawings, the identical structural element is designated by the identical numeral. Accordingly, the overlapping description of the already-described structural element is omitted in the following embodiments.

The detection device 2 differs from the detection device 2 in FIG. 1 in that the detection device 2 further includes an object detector 24 as a functional block.

The object detector 24 detects a candidate of the target body that should be detected by the animal detector 21 or the person detector 22. At this point, the object detector 24 detects the body that looks like the animal or the person. A well-known technology can be used as a method in which the object detector 24 detects the body.

For example, in the still image, the object detector 24 separates a background region based on a color value of a pixel, and detects the body from a foreground region or detects the body from the region where the person or the animal has the characteristic color. Alternatively, in the moving image, the object detector 24 detects the moving body (if any) as the candidate body, or separate the region that is not changed for a long time as the background region to detect the body from the foreground region.

At this point, it is not necessary for the object detector 24 to correctly detect the animal or the person, but it is only necessary for the object detector 24 to specify the region that looks like the target body for the purpose of the efficient processing of the animal detector 21 and the person detector 22.

In the first modification, the animal detector 21 and the person detector 22 perform the body (animal or person) detection processing to the candidate region specified by the object detector 24, thereby providing a label of the animal region or the person region to the each candidate region. At this point, there may be the candidate region to which both the animal detector 21 and the person detector 22 provide the labels of the animal region and the person region. In this case, according to a predetermined rule, a determination part (not illustrated) determines whether the candidate region is the animal region or the person region based on the pieces of detailed feature quantity data stored in the animal feature quantity storage part 40 and the person feature quantity storage part 41.

The detection result output part 23 may determine that the target body ("the animal and the person") is detected in the case that at least one candidate region to which the label of the animal region is provided and at least one candidate region to which the label of the person region is provided exist.

The configuration of the detection device 2 in FIG. 10 may similarly be applied to the following embodiments.

### Second Modification

In the configuration of the first embodiment, the detection result output part 23 classifies the detection result into two kinds of cases, and generates one of the two kinds of the identification information as the detection result identification information. However, the configuration of the detection device 2 of the present invention is not limited to the configuration of the first embodiment. For example, the detection result is classified into four kinds of cases, and one of the four kinds of the identification information may be generated as the detection result identification information. In this case, the display controller 30 of the display control device 3 specifies the advertisement image corresponding to one of the four kinds of the detection result identification information according to the display rule, and displays the specified advertisement image on the display part 5.

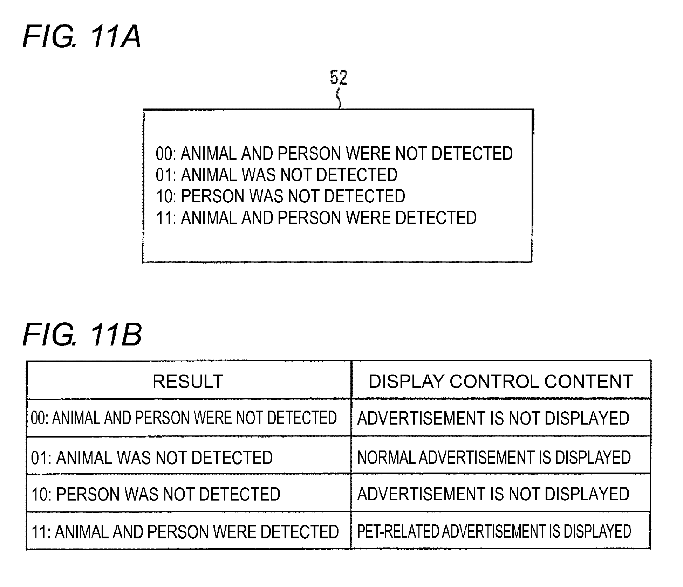

FIG. 11A is a view illustrating a specific example of detection result identification information 52 generated by the detection result output part 23 in a second modification.

When the animal detector 21 does not detect the animal and when the person detector 22 does not detect the person, the detection result output part 23 generates the detection result identification information 52 indicating identification information of "00". The identification information of "00" expresses that both the animal and the person are not detected.

When the animal detector 21 does not detects the animal and when the person detector 22 detects the person, the detection result output part 23 generates the detection result identification information 52 indicating identification information of "01". The identification information of "01" expresses that the person is detected while the animal is not detected.

When the animal detector 21 detects the animal and when the person detector 22 does not detect the person, the detection result output part 23 generates the detection result identification information 52 indicating identification information of "10". The identification information of "10" expresses that the animal is detected while the person is not detected.

When the animal detector 21 detects the animal and when the person detector 22 detects the person, the detection result output part 23 generates the detection result identification information 52 indicating identification information of "11". The identification information of "11" expresses that both the animal and the person are detected.

As described above, in the second modification, the detection result output part 23 outputs the detection result 50 including the detection result identification information 52 indicating one of the pieces of identification information of "00", "01 ", "10", and "11" to the display controller 30.

The display controller 30 controls the display content of the display part 5 according to the detection result identification information 52.

FIG. 11B is a view illustrating a specific example of a display rule referred to by the display controller 30 in the second modification. The display rule in FIG. 11B is stored in the display rule storage part 42.

As illustrated in FIG. 11B, in the table of the display rule, the advertisement images (or the operation not to display the advertisement image) are correlated with the four kinds of the identification information, respectively.

In the example in FIG. 11B, the operation "not to display the advertisement" are correlated with the pieces of identification information "00" and "10". That is, according to the display rule, the display controller 30 does not display the advertisement unless the person (the viewer) is located around the display device 1, but can set the display part 5 to the energy saving mode.

The category of "the normal advertisement" is correlated with the identification information of "01". According to the display rule, in the case that not the animal but the person (the viewer) is located around the display device 1, the display controller 30 does not specialize in the category of the pet, but can display the advertisement image belonging to the normal category on the display part 5.

The category of "the pet-related advertisement" is correlated with the identification information of "11". According to the display rule, in the case that both the animal and the person are located around the display device 1, the display controller 30 determines that the person has a high interest in the pet, and can display the pet-related advertisement specializing in the category of the pet on the display part 5.

According to the above configuration, whether the viewer who is located in the position where the viewer can visually recognize the advertisement is the person having the interest in the animal can be determined based on whether the animal exists near the person. When the person having the interest in the animal is located in the position where the person can visually recognize the advertisement of the display device 1, the pet-related advertisement specializing in the category of the pet can be displayed.

Thus, in the display device 1, the advertisement of the category specializing in the content of interest to the person can effectively be displayed in timing, in which the person is located in the position where the person can view the advertisement, by recognizing the animal and the person.

### Second Embodiment

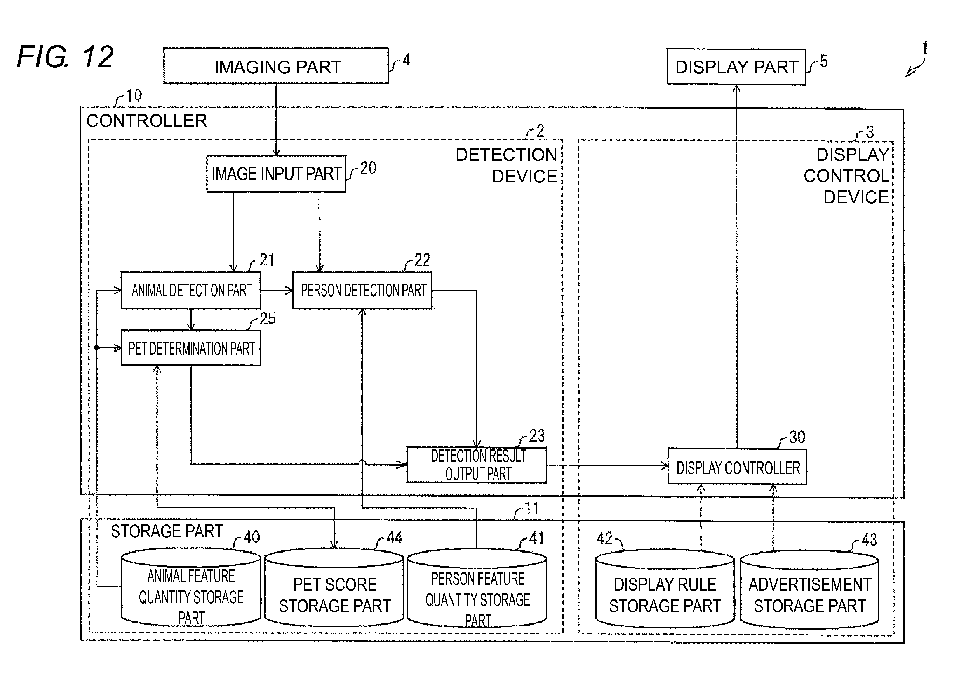

A detection device (and a display device) according to a second embodiment of the present invention will be described below with reference to FIGS. 12 to 14. For the sake of convenience, the component having the same function as that of the first embodiment is designated by the same numeral, and the description is omitted.

### [Configuration of Display Device]

FIG. 12 is a block diagram illustrating configurations of main portions of the detection device 2 and the display control device 3 in the display device 1 of the second embodiment. The display device 1 in FIG. 12 differs from the display device 1 in FIG. 1 in that the detection device 2 further includes a pet determination part 25 and a pet score storage part 44. The controller 10 includes the pet determination part 25 as a functional block. The storage part 11 includes the pet score storage part 44.

The pet determination part 25 determines whether the animal detected by the animal detector 21, namely, the animal taken in the animal region specified by the animal detector 21 is the pet. In the second embodiment, "the animal is the pet" means that "the animal is kept by the person" irrespective of the animal breed.

A pet score is stored in the pet score storage part 44. The pet score is a value indicating a probability that the animal detected by the animal detector 21 is the pet. The pet score is obtained such that the pet determination part 25 evaluates the feature quantity data in the animal region specified by the animal detector 21. In the second embodiment, the probability that the animal taken in the animal region is the pet increases with increasing pet score.

In addition to the feature quantity data of the model, which is used to detect the animal by the animal detector 21, the following feature quantity data is stored in the animal feature quantity storage part 40 referred to by the pet determination part 25. For example, the feature quantity data of the model reflecting the pet-looking feature (or the characteristic feature of the pet) and the feature quantity data of the model reflecting the not-pet-looking feature (or the inconceivable feature of the pet) are stored in the animal feature quantity storage part 40.

The pet determination part 25 calculates the pet score in each animal region specified by the animal detector 21, and the pet determination part 25 stores the pet score in the pet score storage part 44. For example, the pet score storage part 44 may be constructed by a volatile storage device. In this case, the pet score is temporarily stored, and the pet determination part 25 appropriately reads the pet score when finally determining whether the animal is the pet.

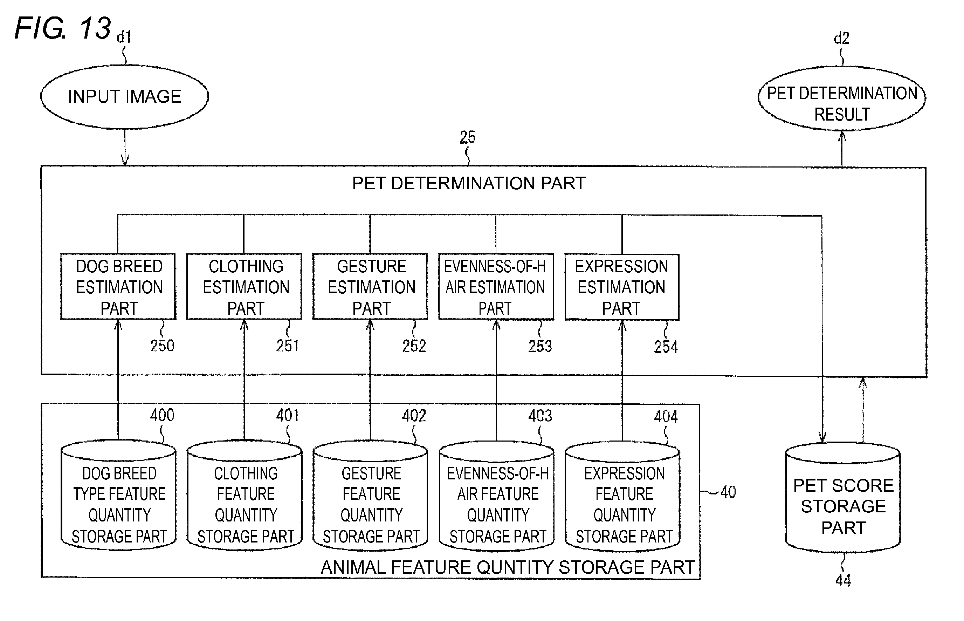

A specific example of a method in which the pet determination part 25 calculates the pet score will be described in detail with reference to FIG. 13.

### [Pet Determination Processing]

FIG. 13 is a block diagram illustrating configurations of main portions of the pet determination part 25 and the animal feature quantity storage part 40. A configuration in the case that the pet determination part 25 determines whether the dog is a pet or a dog (a stray dog) that is kept by no one is illustrated in FIG. 13 by way of example when the animal breed is dog.

As illustrated in FIG. 13, the pet determination part 25 includes a dog breed determination part 250, a clothing estimation part 251, a gesture estimation part 252, an evenness-of-hair estimation part 253, and an expression estimation part 254 as functional blocks. The animal feature quantity storage part 40 includes a dog breed type feature quantity storage part 400, a clothing feature quantity storage part 401, a gesture feature quantity storage part 402, an evenness-of-hair feature quantity storage part 403, and an expression feature quantity storage part 404.

Each estimation part of the pet determination part 25 performs pet determination processing to an input image d1 input from the animal detector 21. The animal region is specified in the input image d1. For example, the input image d1 is images illustrated in FIGS. 4A, 4C, and 4D. Alternatively, the data input from the animal detector 21 to the pet determination part 25 may be each of the animal regions in the double-line frame cut out from the images in FIGS. 4A, 4C, and 4D. Alternatively, the input image d1 may be the moving image in which the double-line frame tails the moving animal region.

In the case that the animal (the animal included in the animal region) detected by the animal detector 21 is the dog, the dog breed determination part 250 evaluates a dog breed, and estimates a probability that the dog is the pet based on the dog breed.

Specifically, the feature quantity data of the model in each well-known dog breed is previously stored in the dog breed type feature quantity storage part 400. For example, the pieces of feature quantity data, such as a color, a body type, a face shape, a tail shape, and information on a noticeable feature portion of a dog breed "Shiba inu" are stored in the dog breed type feature quantity storage part 400 while correlated with the dog breed "Shiba inu". The feature quantity data is stored in each of the dog breeds (such as a Chihuahua and a Poodle)

The dog breed determination part 250 compares the feature quantity data extracted from the animal region (for example, the double-line frame in FIG. 4A, hereinafter referred to as an animal region A) to the feature quantity data of the model of the dog breed type, and estimates the dog breed of the dog in the animal region A based on the degree of similarity. In the second embodiment, as a result of comparison, the dog breed determination part 250 estimates the dog breed as a "mixed breed" in the case that the feature quantity data extracted from the animal region A does not agree with the feature quantity data of the model of any dog breed type (only the low degree of similarity is obtained).

For example, the dog breed determination part 250 acquires the score of the dog breed, which is previously allocated according to the estimated dog breed, from the dog breed type feature quantity storage part 400, and adds the score to the pet score in the animal region A stored in the pet score storage part 44. As to the previously-allocated score, for example, it is not considered that an expensive, pedigree dog or a dog of a very rare dog breed is a stray dog that is kept by no one. Therefore, the high score is allocated to the expensive, pedigree dog and the dog of the very rare dog breed, while the low score is allocated to the mixed-breed dog.

As a result of the comparison, in the case that the feature quantity data extracted from the animal region A does not agree with the feature quantity data of the model of any dog breed type, the pet determination part 25 may cause each part (not illustrated), which estimates the breeds of other kinds of animals (such as a cat and a bird), to estimate the breed.

The clothing estimation part 251 performs image recognition of an article worn by the animal, and estimates a probability that the animal is the pet based on the article. Sometimes the pet kept by the person wears accessories, such as a collar, a ribbon, and clothes, and it is unconceivable that the dog kept by no one wears accessories. Sometimes the pet kept by the person chews on toys, such as a ball and a flying disk.

Therefore, the clothing estimation part 251 performs the image recognition of the article worn by the animal based on the article feature quantity data stored in the clothing feature quantity storage part 401. In the animal region (for example, the animal region A) where the article worn by the animal is recognized through the image recognition, the clothing estimation part 251 acquires the score of the clothing from the clothing feature quantity storage part 401, and adds the score to the pet score in the animal region A. The clothing estimation part 251 may add the score, which is allocated in each recognized article. For example, 10 points are added when the animal wears clothes, and 3 points are added when the animal wears the collar. Alternatively, 10 points or zero point may be added to the pet score based on whether the article is recognized.

It is considered that the article worn by the pet dog is taken more cleanly and brighter than the article worn by the dog that is not the pet. Therefore, the clothing estimation part 251 may add the score according to color information on the recognized article.

It is considered that the probability that the animal is the pet increases in the case that the animal is accommodated in some sort of cases irrespective of the article worn by the animal. For example, it is conceivable that the face of the small dog is seen from the mouth of the bag in which the dog is accommodated. Therefore, in the case that the article (such as a bag, a pound, and a cage) that accommodates the animal is recognized, the clothing estimation part 251 can add the pet score greater than or equal to the collar and the like to the animal accommodated in the article.

The gesture estimation part 252 recognizes action (gesture) of the animal detected by the animal detector 21, and evaluates the probability that the animal is the pet based on the action. The dog kept by the person is used to people, the dog moves around the person or wags its tail, and the dog has the good health and moves actively. It is considered that the dog kept by no one is reverse.

Therefore, the gesture estimation part 252 compares the characteristic gesture of the pet and the pet-looking gesture, which are stored in the gesture feature quantity storage part 402, to the gesture of the animal detected by the animal detector 21. For example, the gesture estimation part 252 compares the gesture of the model to the gesture of the dog included in the animal region A. The gesture estimation part 252 estimates the pet-looking gesture of the animal in the animal region A according to the comparison result. The gesture estimation part 252 acquires the score of the gesture from the gesture feature quantity storage part 402 such that the score provided to the animal increases with increasing gesture, which is similar to or agrees with the characteristic gesture of the pet (pet-looking gesture), and the gesture estimation part 252 adds score to the animal score.

The evenness-of-hair estimation part 253 performs the image recognition to evenness of hair of the animal detected by the animal detector 21, and evaluates the probability that the animal is the pet based on the evenness of hair. The pet kept by the person is groomed well by the person, and the pet has the good evenness of hair and good skin. It is considered that the dog kept by no one is reverse.

Therefore, the evenness-of-hair estimation part 253 reads the feature quantity data in the good evenness-of-hair state and the feature quantity data in the bad evenness-of-hair state, which are stored in the evenness-of-hair feature quantity storage part 403. For example, the evenness-of-hair estimation part 253 compares the feature quantity data of the read model to the evenness-of-hair feature quantity data of the animal, which is obtained from the input image d1 and included in the animal region A. The evenness-of-hair estimation part 253 estimates that the evenness of hair of the animal is good when the evenness-of-hair feature quantity data of the animal is similar to the feature quantity data in the good state. On the other hand, the evenness-of-hair estimation part 253 estimates that the evenness of hair of the animal is bad when the evenness-of-hair feature quantity data of the animal is similar to the feature quantity data in the bad state. The evenness-of-hair estimation part 253 adds the score of the evenness of hair to the pet score in the animal region A such that the high score is obtained in the good evenness of hair compared with the bad evenness of hair. As to the evenness of hair, the evenness-of-hair estimation part 253 may estimate the evenness of hair to be "normal" between "good" and "bad".

The expression estimation part 254 performs the image recognition to an expression (or an emotion expressed by the whole body) of the animal detected by the animal detector 21, and evaluates the probability that the animal is the pet based on the recognition result.

For example, the pet acts with the owner, and the pet actively goes around outdoors in the walk. Therefore, it is considered that the pet heaves and is tired. Because the pet is looked after and protected by the owner, it is considered that the pet has a chance for delight rather than a chance for anger. It is considered that the dog kept by no one is reverse.

Therefore, the pieces of feature quantity data of the models of various expressions for the dog face and the pieces of feature quantity data of the models of various emotional expressions for the dog body are stored in the expression feature quantity storage part 404. The expression estimation part 254 compares the feature quantity data of the model to the feature quantity data of the animal extracted from the animal region A, and estimates the expression or the emotion of the animal. In the case that the pet-looking expression (or the emotion) is recognized, the expression estimation part 254 acquires the score allocated to each recognized expression from the expression feature quantity storage part 404, and adds the score to the pet score in the animal region A. In the expression feature quantity storage part 404, the higher score is allocated with increasing pet-looking expression (emotion). For example, 10 points are allocated in "delight", 2 points are allocated in "anger", and 1 point is allocated in "expressionless face".

As described above, in one animal region (for example, in the double-line frame in FIG. 4A, namely, the animal region A), some of or all the estimation parts of the pet determination part 25 estimates the probability that the animal in the animal region A is the pet. After each estimation part performs the estimation, the pet score, which is stored in the pet score storage part 44 and correlated with the animal region A, is the final pet score of the animal in the animal region A.

The pet determination part 25 reads the pet score in the animal region A, which is stored in the pet score storage part 44, and determines whether the animal in the animal region A is the pet. In the second embodiment, the pet determination part 25 determines that the animal in the animal region A is not the pet when the pet score is less than a predetermined threshold, and the pet determination part 25 determines that the animal in the animal region A is the pet when the pet score is greater than or equal to the threshold.

For example, the dog in the animal region A (in the double-line frame in FIG. 4A) does not wear articles, such as the collar, the dog is mixed-breed , and the dog does not move actively. Therefore, for example, it is assumed that the pet score is small, such as 10 points. Assuming that the threshold is 50 points, because of 10 points<50 points, the pet determination part 25 determines that the dog in the animal region A is not the pet.

The pet determination part 25 supplies information indicating whether the animal in the animal region A is the pet, namely, a pet determination result d2 to the detection result output part 23.

The configuration in the case that when the animal breed is dog, the pet determination part 25 determines whether the dog is a pet or a dog (a stray dog) that is kept by no one is illustrated in FIG. 13 by way of example. However, the pet determination part 25 and the animal feature quantity storage part 40 are not limited to the configuration in FIG. 13. The detection device 2 of the second embodiment includes various estimation units such that the pet determination part 25 makes the pet determination with respect to any kind of animal, and the necessary feature quantity data is appropriately retained in the animal feature quantity storage part 40.

In the second embodiment, the detection device 2 is intended to detect "at least one animal and at least one person" from one image. That is, it is said that the body detected by the detection device 2 is "the animal and the person".

Accordingly, the detection result output part 23 determines that the target body ("the pet and the person") is detected, when the animal detector 21 detects the animal, when the person detector 22 detects the person, and when the pet determination part 25 determines that the detected animal is the pet. Only in the case that "the pet and the person" are detected, the detection result output part 23 generates the detection result identification information indicating the identification information of "1", which expresses that the target body is detected. Otherwise the detection result output part 23 generates the detection result identification information indicating the identification information of "0", which expresses that the target body is not detected. The second embodiment differs from the first embodiment in that, even if the animal is detected, the determination that "the target body is not detected" is made unless the animal is the pet.

For example, in the configuration of the first embodiment, because the detection device 2 determines that "the animal and the person" are detected with respect to the input image in FIG. 4A, the display control device 3 performs the control such that the pet-related advertisement is displayed. However, as illustrated in FIG. 4A, possibly the stray dog and the person who has not relationship with the stray dog are incidentally located around the display device 1. There is a probability that the person neither likes the pet nor has an interest in the pet. In such cases, even if the pet-related advertisement is displayed, possibly the effect of the advertisement cannot be enhanced.

On the other hand, according to the second embodiment, as described above, the pet determination part 25 determines that the dog in the animal region A is not the pet. According to the determination result, the detection result output part 23 outputs the detection result identification information indicating the identification information of "0" to the display controller 30.

Accordingly, in the scene in FIG. 4A, the display controller 30 does not specialize in the pet-related advertisement, but performs the control such that the normal advertisement is displayed. In the scene in FIG. 4A, because the person who has the interest in the pet is not always located in the position where the person can visually recognize the advertisement, it is said that the advertisement control is suitable for the scene.

As a result, the detection device 2 and the display control device 3 of the second embodiment can more correctly recognize the surrounding situation, and control the display device 1 in more effective timing such that the advertisement having the more effective contents is displayed.

### [Processing Flow of Display Device]

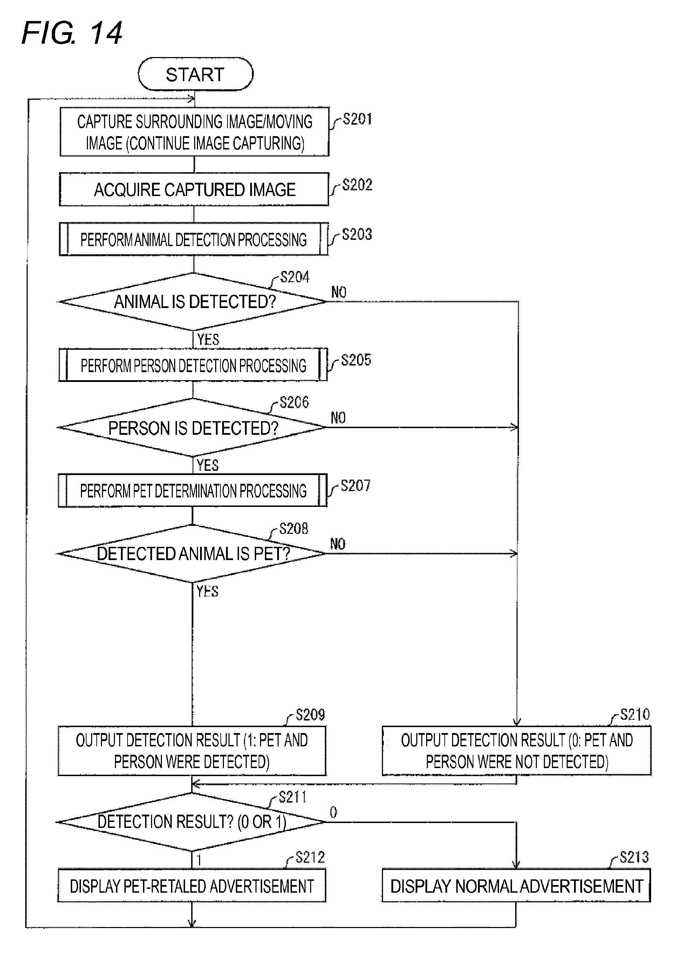

FIG. 14 is a flowchart illustrating a processing flow in the display device 1 of the second embodiment.

Because the operations of the detection device 2 in S201 to S206 are identical to those of the detection device 2 in S101 to S106 in FIG. 9, the overlapping description is omitted.

When the animal is not detected (NO in S204), or when the person is not detected (NO in S206), the detection result output part 23 generates the detection result identification information expressing that "the pet and the person are not detected", and outputs the detection result 50 including the detection result identification information (S210).

On the other hand, when both the animal and the person are detected (YES in S204 and YES in S206), the pet determination part 25 performs the pet determination processing to at least one animal, which is detected from the image by the animal detector 21 (S207). The content of the pet determination processing is already described with reference to FIG. 13. The pet determination part 25 calculates the pet score in each detected animal, and determines that the animal of which the pet score greater than or equal to a predetermined threshold is calculated is the pet.

When the pet determination part 25 determines that the detected animal is not the pet (NO in S208), similarly the detection result output part 23 generates the detection result identification information expressing that "the pet and the person are not detected", and outputs the detection result 50 including the detection result identification information (S21 0).

On the other hand, when the pet determination part 25 determines that the detected animal is the pet (YES in S208), the detection result output part 23 generates the detection result identification information expressing that "the pet and the person are detected", and outputs the detection result 50 including the detection result identification information (S209).

In the case that the plural animals are detected and in the case that whether each of the animals is the pet is determined, the detection result output part 23 may determine that "the pet and the person are detected" when determined that at least one animal is the pet.

In the display control device 3, the display controller 30 specifies the advertisement image corresponding to the detection result identification information based on the detection result identification information that is included in the detection result 50 supplied from the detection result output part 23.

Because the operations of the detection device 2 in S211 to S213 are identical to those of the detection device 2 in S109 to S111 in FIG. 9, the overlapping description is omitted.

According to the above method, even if the animal is detected from the image, whether the detected animal is a pet which has the relationship with the person is further determined. When determined that the animal is not the pet, the detection device 2 can determine that the target body is not detected.

Specifically, for example, the pet determination part 25 determines that the dog in the animal region A (in the double-line frame in FIG. 4A) is not the pet. According to the determination result, the detection result output part 23 outputs the detection result identification information indicating the identification information of "0" to the display controller 30.

Accordingly, in the scene in FIG. 4A, the display controller 30 does not specialize in the pet-related advertisement, but performs the control such that the normal advertisement is displayed. In the scene in FIG. 4A, the pet does not exist, and there is the low probability that the person who has the interest in the pet is located in the position where the person can visually recognize the advertisement. Therefore, it is said that the advertisement control is suitable for the scene.

As a result, the detection device 2 and the display control device 3 of the second embodiment can more correctly recognize the surrounding situation, and control the display device 1 in more effective timing such that the advertisement having the more effective contents is displayed.

In the example in FIG. 14, the detection device 2 performs the animal detection processing in advance of the person detection processing. However, the processing sequence of the display device 1 is not limited to the example in FIG. 14. For example, the sequences of the animal detection processing performed by the animal detector 21 and the person detection processing performed by the person detector 22 can be switched. The pet determination processing may be performed anytime by the pet determination part 25 as long as the pet determination processing is performed after the animal detection processing performed by the animal detector 21. For example, the pet determination processing may be performed before the person detection processing performed by the person detector 22. However, preferably the method in FIG. 14 is adopted in the case that a load of the pet determination processing performed by the pet determination part 25 becomes the maximum. The processing sequence, in which the animal detection processing and the person detection processing are performed in first and the pet determination processing is performed only in the case that the animal and the person are detected, is the most suitable from the viewpoint of avoiding the high-load processing as much as possible.

### Third Embodiment

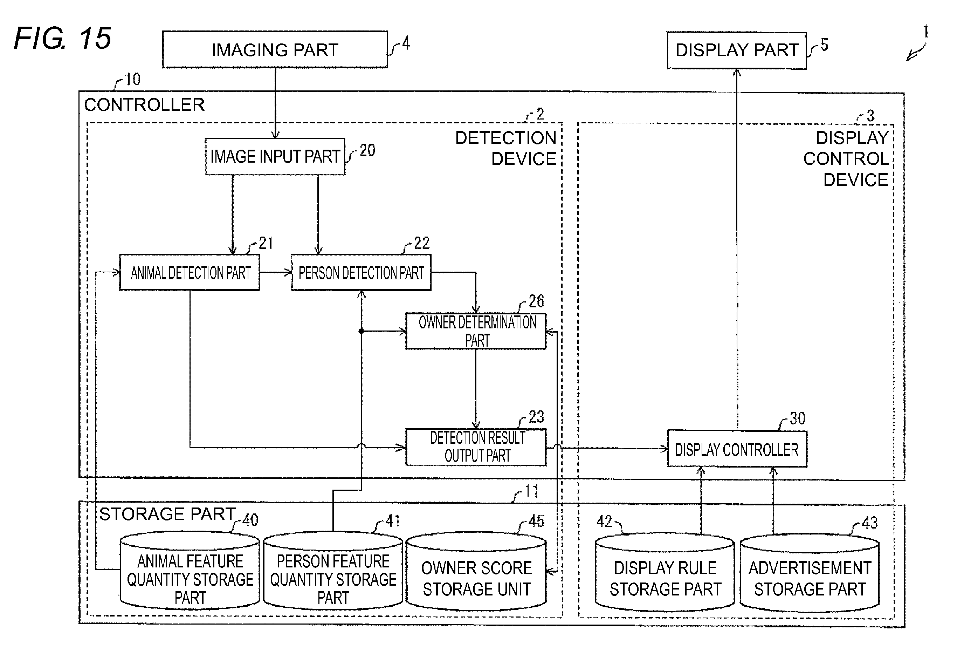

A detection device (and a display device) according to a third embodiment of the present invention will be described below with reference to FIGS. 15 to 17. For the sake of convenience, the component having the same function as that of the first and second embodiments is designated by the same numeral, and the description is omitted.

### [Configuration of Display Device]

FIG. 15 is a block diagram illustrating configurations of main portions of the detection device 2 and the display control device 3 in the display device 1 of the third embodiment. The display device 1 in FIG. 15 differs from the display devices 1 in FIGS. 1 and 12 in that the detection device 2 further includes an owner determination part 26 and an owner score storage part 45. The controller 10 includes the owner determination part 26 as a functional block. The storage part 11 includes the owner score storage part 45.

The owner determination part 26 determines whether the person detected by the person detector 22, namely, the person taken in the person region specified by the person detector 22 is the owner. In the third embodiment, "the person is the owner" means that "the person keeps the animal (pet)". In the third embodiment, not only the person who walks with the person's animal there but also the person who has the relationship with the animal (the pet) and the interest in the animal (the pet) is determined to be the owner.

An owner score is stored in the owner score storage part 45. The owner score is a value indicating a probability that the person detected by the person detector 22 is the owner (has the relationship with the animal). The owner score is obtained such that the owner determination part 26 evaluates the feature quantity data in the person region specified by the person detector 22. In the third embodiment, the probability that the person taken in the person region is the owner increases with increasing owner score.

In addition to the feature quantity data of the model, which is used to detect the person by the person detector 22, the following feature quantity data is stored in the person feature quantity storage part 41 referred to by the owner determination part 26. For example, the feature quantity data of the model reflecting the owner-looking feature (or the characteristic feature of the owner) and the feature quantity data of the model reflecting the not-owner-looking feature (or the inconceivable feature of the owner) are stored in the person feature quantity storage part 41.

The owner determination part 26 calculates the owner score in each person region specified by the person detector 22, and the owner determination part 25 stores the owner score in the owner score storage part 45. For example, the owner score storage part 45 may be constructed by a volatile storage device. In this case, the owner score is temporarily stored, and the owner determination part 26 appropriately reads the pet score when finally determining whether the person is the owner.

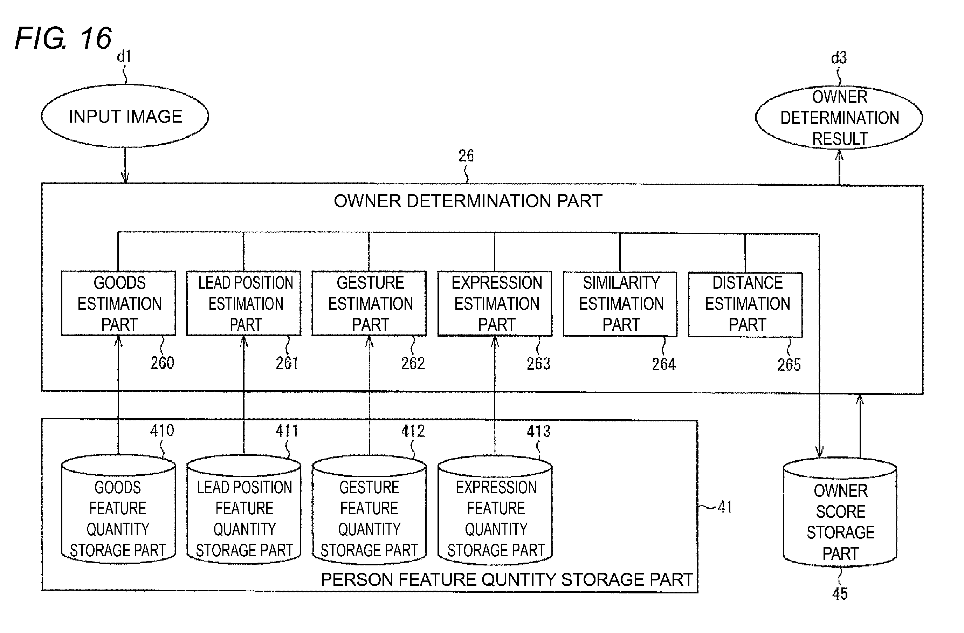

A specific example of a method in which the owner determination part 26 calculates the owner score will be described in detail with reference to FIG. 16.

### [Owner Determination Processing]

FIG. 16 is a block diagram illustrating configurations of main portions of the owner determination part 26 and the person feature quantity storage part 41.

As illustrated in FIG. 16, the owner determination part 26 includes a goods estimation part 260, a lead position estimation part 261, a gesture estimation part 262, an expression estimation part 263, a similarity estimation part 264, and a distance estimation part 265 as functional blocks. The person feature quantity storage part 41 includes a goods feature quantity storage part 410, a lead position feature quantity storage part 411, a gesture feature quantity storage part 412, and an expression feature quantity storage part 413.

Each estimation part of the owner determination part 26 performs owner determination processing to the input image d1, which is input from the person detector 22. The person region is specified in the input image d1. For example, the input images d1 are the images illustrated in FIGS. 4A, 4B, and 4D.

Alternatively, the data input from the person detector 22 to the owner determination part 26 may be each of the person regions in the broken-line frame cut out from the images in FIGS. 4A, 4B, and 4D. Hereinafter, the regions in the broken-line frames of the input image d1 in FIG. 4A are referred to as a person region B and a person region B' in order from the left. The region in the broken-line frame of the input image d1 in FIG. 4D is referred to as a person region B".

The goods estimation part 260 performs the image recognition of the article worn by the person, and estimates a probability that the person is the owner based on the article. When walking with the pet, sometimes the owner holds goods, such as the lead, the cage, a bag used to pick up dust of the pet, which are related to the pet. It is also considered that the owner holds toys, such as the ball and the flying disk, in order to play with the pet.

Therefore, the goods estimation part 260 performs the image recognition of the article worn by the person based on the article feature quantity data stored in the goods feature quantity storage part 410. In the person region where the pet-related article worn by the person is recognized through the image recognition, the goods estimation part 260 acquires the score of the goods from the goods feature quantity storage part 410, and adds the score to the owner score in the person region. In the goods feature quantity storage part 410, the score is allocated to each of the recognized goods. For example, 10 points are allocated when the person holds the lead or the cage, and 3 points are allocated when the person holds the ball. Alternatively, 10 points or zero point may be added to the owner score based on whether per-related goods are recognized.

The owner score is stored in the owner score storage part 45 in each person region. For example, the owner score is stored in each of the person regions B and B' detected from the input image d1 in FIG. 4A.

In the articles worn by the person, the articles that can be recognized as the pet-related goods include a bag in which the small pet can be accommodated in addition to the above examples. It is assumed that the person has the bag, and that the face of the animal-looking body is seen from the mouth of the bag. In this case, the goods estimation part 260 can more surely estimate that the person is the owner who keeps the pet, and the goods estimation part 260 can add the owner score greater than or equal to that of the lead or the cage to the person.

The lead position estimation part 261 recognizes the lead-looking (such as the cord, the chain, and the rein) body existing between the person and the animal, thereby estimating that the person leads the animal. When the person leads the animal using the lead, it is clear that the person is the owner.

For example, lead feature quantity data used to perform the image recognition of the lead is stored in the lead position feature quantity storage part 411. For example, pieces of information on usual pattern and shapes of the lead are stored. The lead position estimation part 261 recognizes the lead-looking body from the image using the pieces of feature quantity data. Alternatively, the lead position estimation part 261 may perform edge detection of the image to detect the linear body as the lead-looking body.

Then the lead position estimation part 261 performs the image recognition to check where leading ends of the detected linear body are connected to. For example, the input image d1 is the whole image in FIG. 4A, and the lead position estimation part 261 can recognize not only the person region but also the position of the animal region.

The lead position estimation part 261 estimates that the person leads the animal when recognizing that one of the leading ends of the linear body is connected to the person while the other leading end is connected to the animal. More particularly, the lead position estimation part 261 can estimate that the person leads the animal when recognizing that one of the leading ends of the linear body is connected to the hand of the person while the other leading end is connected to the animal. Therefore, in the case that the lead position estimation part 261 mistakenly recognizes the unintended linear body as the lead, the lead position estimation part 261 can be prevented from mistakenly estimating that the person leads the animal. This is because it is hardly conceivable that the person leads the animal without holding the lead.

When estimating that the person leads the animal, the lead position estimation part 261 adds the score of the lead position such that the high owner score is obtained in the person region of the person. For example, the lead position estimation part 261 adds 10 points to the owner score of the person region B" when estimating that the person (for example, the person in the person region B" in FIG. 4D) leads the animal. Alternatively, the lead position estimation part 261 adds 0 point to the owner score of the person region B when estimating that the person (for example, the person in the person region B in FIG. 4A) does not lead the animal.

The gesture estimation part 262 recognizes action (gesture) of the person detected by the person detector 22, and evaluates the probability that the person is the owner based on the action. The person who keeps the pet likes the animal, comes close to the animal to touch or hold the animal, or plays with the animal. Alternatively, it is considered that the animal kept by the person comes close to the person to play with or run around the person. In the case that the person walks with the animal (the pet), it is considered that the pet and the person perform the same action. For example, it is considered that the pet and the person move at a constant distance (the same speed).

Therefore, the gesture estimation part 262 compares the owner-looking gesture (a model gesture) stored in the gesture feature quantity storage part 412 to the gesture of the person detected by the person detector 22. The owner-looking gesture is also defined in the relationship between the animal position and the gesture. Accordingly, the owner model gesture stored in the gesture feature quantity storage part 412 may include the pieces of information on the animal position and the gesture.

The gesture estimation part 262 estimates the owner-looking gesture of the person in each person region according to the comparison result. The gesture estimation part 262 acquires the score of the gesture from the gesture feature quantity storage part 412 such that the score provided to the person increases with increasing gesture, which is similar to or agrees with the characteristic gesture of the owner (owner-looking gesture), and the gesture estimation part 262 adds score to the owner score of the person.

The expression estimation part 263 performs the image recognition to the expression (what kind of an emotion?, does the mouth move?, or which direction is the face or the eye line oriented?) of the person detected by the person detector 22, and evaluates the probability that the person is the owner based on the recognition result.

It is considered that the face of the owner is relaxed to become smiling features when contacting the animal (particularly, the pet of the owner). Because the owner has the interest in the animal, it is considered that the face of the owner is oriented toward the animal frequently or for a long time, or that the owner watches the animal frequently or for a long time. It is considered that the owner talks to the animal.

Therefore, the pieces of feature quantity data of the models of various expressions for the person face are stored in the expression feature quantity storage part 413. The expression estimation part 263 compares the feature quantity data of the model to the feature quantity data extracted from the person region, particularly the region of the face of the person, and estimates the expression of the person. In the case that the owner-looking expression is recognized, the expression estimation part 263 acquires the score allocated to each recognized expression from the expression feature quantity storage part 413, and adds the score to the owner score in each of the person regions B, B', and B". In the expression feature quantity storage part 413, the higher score is allocated with increasing owner-looking expression.

For example, 10 points are allocated in the case that "the mouth of the person moves so as to talk to the animal", 9 points is allocated in the case that "the eye line is oriented toward the animal", 8 points are allocated in the case that "the person feels delight when the animal exists in front of the person", and 2 point are allocated in the case that "the person turns person's face from the animal".

The similarity estimation part 264 obtains the degree of similarity between goods worn by the person and goods worn by the animal, and evaluates the probability that the person is the owner based on the degree of similarity.

It is sufficiently considered that the owner and the pet wear goods having the same pattern. It is assumed that the owner preferably wears name-brand clothing and shoes. It is sufficiently considered that the owner causes the pet kept by the owner to wear the same name-brand collar, lead, and clothing.

Therefore, the similarity estimation part 264 performs the image recognition to the article worn by the person, performs the image recognition to the article worn by the animal, and compares the image recognition results to each other. The similarity estimation part 264 adds the score of the similarity to the owner score corresponding to the person in the case that the article having the high degree of similarity, such that the color, the pattern, and the symbol are common to the person and the animal. The similarity estimation part 264 adds the score such that the score increases with increasing similarity of the article or with increasing number of articles having the similarity.

The distance estimation part 265 evaluates the probability that the person in the person region is the owner based on the distance between the person region and the animal region in the input image d1. The distance estimation part 265 adds the score of the distance to the owner score so that the owner score increases as the distance between the person and the animal decreases such that the person holds or touches the animal.

As described above, in each person region (for example, in the broken-line frame in FIG. 4A, namely, the person regions B and B'), some of or all the estimation parts of the owner determination part 26 estimates the probability that the person in the person region is the owner. After each estimation part performs the estimation, the owner score, which is stored in the owner score storage part 45 and correlated with the person region, is the final owner score of the person in the person region.

The owner determination part 26 reads the owner score in the owner region, which is stored in the owner score storage part 45, and determines whether the person in the person region is the owner. In the third embodiment, the owner determination part 26 determines that the person in the person region is not the owner when the owner score is less than a predetermined threshold, and the owner determination part 26 determines that the person in the person region is the owner when the owner score is greater than or equal to the threshold.

For example, the person in the person region B (in the broken-line frame on the left in FIG. 4A) does not have the pet-related goods. Additionally, the person is not oriented toward the detected animal (animal region A), and the person does not have the interest in the animal. The person in the person region B' does not have the pet-related goods, and the person is distant from the animal. Accordingly, the high owner score is not added, but it is assumed that the owner scores in the person regions B and B' are 10 points and 15 points, respectively. Assuming that the threshold is 50 points, because of 10 points<50 points and 15 points<50 points, the owner determination part 26 determines that the persons in the person regions B and B' are not the owners.

The owner determination part 26 supplies information indicating whether the person in each of the person regions B and B' is the owner, namely, an owner determination result d3 to the detection result output part 23.

In the third embodiment, the detection device 2 is intended to detect "at least one animal and at least one owner" from one image. That is, it is said that the body detected by the detection device 2 is "the animal and the owner".

Accordingly, the detection result output part 23 determines that the target body ("the animal and the owner") is detected, when the animal detector 21 detects the animal, when the person detector 22 detects the person, and when the owner determination part 26 determines that the detected person is the owner. Only in the case that "the animal and the owner" are detected, the detection result output part 23 generates the detection result identification information indicating the identification information of "1 ", which expresses that the target body is detected. Otherwise the detection result output part 23 generates the detection result identification information indicating the identification information of "0", which expresses that the target body is not detected. The third embodiment differs from the first and second embodiments in that, even if the person is detected, the determination that "the target body is not detected" is made unless the person is the owner.

For example, in the configuration of the first embodiment, because the detection device 2 determines that "the animal and the person" are detected with respect to the input image in FIG. 4A, the display control device 3 performs the control such that the pet-related advertisement is displayed. However, in the scene in FIG. 4A, possibly the dog and the person who has not relationship with the dog are incidentally located around the display device 1. There is a probability that the person neither likes the pet nor has an interest in the pet. In such cases, even if the pet-related advertisement is displayed, possibly the effect of the advertisement cannot be enhanced.

On the other hand, according to the configuration of the third embodiment, as described above, the owner determination part 26 determines that the persons in the person regions B and B' are not the owners. According to the determination result, the detection result output part 23 outputs the detection result identification information indicating the identification information of "0" to the display controller 30.

Accordingly, in the scene in FIG. 4A, the display controller 30 does not specialize in the pet-related advertisement, but performs the control such that the normal advertisement is displayed. In the scene in FIG. 4A, because the person who has the interest in the pet is not always located in the position where the person can visually recognize the advertisement, it is said that the advertisement control is suitable for the scene.

As a result, the detection device 2 and the display control device 3 of the third embodiment can more correctly recognize the surrounding situation, and control the display device 1 in more effective timing such that the advertisement having the more effective contents is displayed.

### [Processing Flow of Display Device]

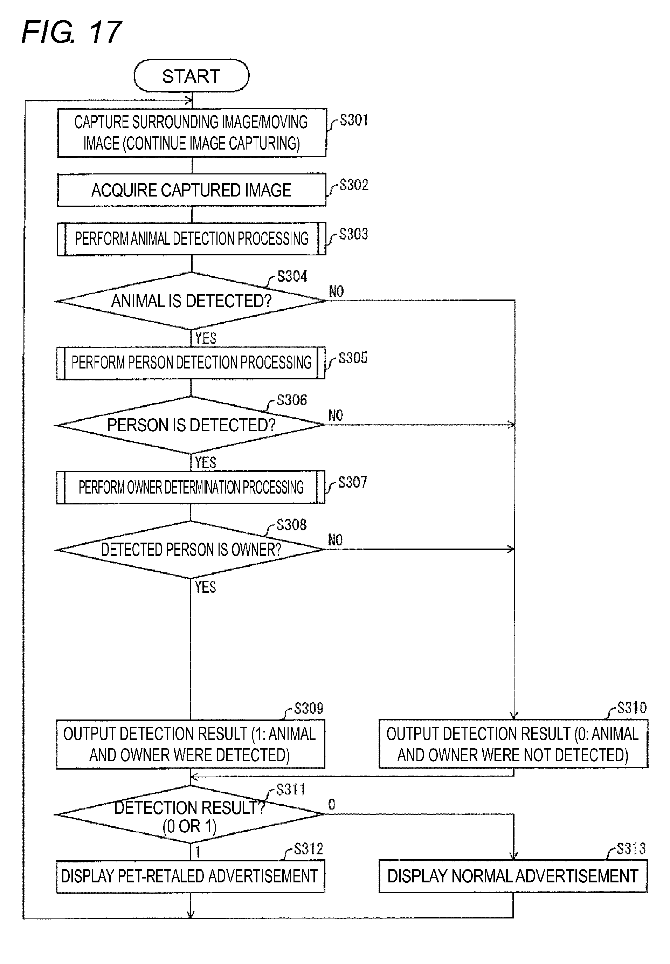

FIG. 17 is a flowchart illustrating a processing flow in the display device 1 of the third embodiment.

Because the operations of the detection device 2 in S301 to S306 are identical to those of the detection device 2 in S101 to S106 in FIG. 9, the overlapping description is omitted.

When the animal is not detected (NO in S304), or when the person is not detected (NO in S306), the detection result output part 23 generates the detection result identification information expressing that "the animal and the person are not detected", and outputs the detection result 50 including the detection result identification information (S31 0).

On the other hand, when both the animal and the person are detected (YES in S304 and YES in S306), the owner determination part 26 performs the owner determination processing to at least one person, who is detected from the image by the person detector 22 (S307). The content of the pet determination processing is already described with reference to FIG. 16. The owner determination part 26 calculates the owner score in each detected person, and determines that the person having the owner score greater than or equal to a predetermined threshold is the owner.

When the owner determination part 26 determines that the detected person is not the owner (NO in S308), similarly the detection result output part 23 generates the detection result identification information expressing that "the animal and the owner are not detected", and outputs the detection result 50 including the detection result identification information (S310).

On the other hand, when the owner determination part 26 determines that the detected person is the owner (YES in S308), the detection result output part 23 generates the detection result identification information expressing that "the animal and the owner are detected", and outputs the detection result 50 including the detection result identification information (S309).

In the case that the plural persons are detected and in the case that whether each of the persons is the owner is determined, the detection result output part 23 may determine that "the animal and the owner are detected" when at least one person is the owner.

In the display control device 3, the display controller 30 specifies the advertisement image corresponding to the detection result identification information based on the detection result identification information that is included in the detection result 50 supplied from the detection result output part 23.

Because the operations of the detection device 2 in S311 to S313 are identical to those of the detection device 2 in S109 to S111 in FIG. 9, the overlapping description is omitted.

According to the above method, even if the person is detected from the image, whether the detected person is the owner who has the interest in the animal is further determined. When the person is not the owner, the detection device 2 can determine that the target body is not detected.

Specifically, for example, the owner determination part 26 determines that the person in the person region B (in the broken-line frame in FIG. 4A) is not the owner. According to the determination result, the detection result output part 23 outputs the detection result identification information indicating the identification information of "0" to the display controller 30.

Accordingly, in the scene in FIG. 4A, the display controller 30 does not specialize in the pet-related advertisement, but performs the control such that the normal advertisement is displayed. In the scene in FIG. 4A, because the person who has the relationship with the pet is not always located in the position where the person can visually recognize the advertisement, it is said that the advertisement control is suitable for the scene.

On the other hand, the owner determination part 26 determines that the person in the person region B" is the owner. According to the determination result in which the animal and the owner are detected, the detection result output part 23 outputs the detection result identification information indicating the identification information of "1" to the display controller 30.

Accordingly, in the scene in FIG. 4D, the display controller 30 performs the control such that the pet-related advertisement is displayed. In the scene in FIG. 4D, the person leads the animal in the person region B", and there is a high probability that the person has the interest in the animal (the pet). When the person is located in the position where the person can visually recognize the advertisement, because of the display of the pet-related advertisement, it is said that the above advertisement control is suitable for the scene.

As a result, the detection device 2 and the display control device 3 of the third embodiment can more correctly recognize the surrounding situation, and control the display device 1 in more effective timing such that the advertisement having the more effective contents is displayed.

In the example in FIG. 17, the detection device 2 performs the animal detection processing in advance of the person detection processing. However, the processing sequence of the display device 1 is not limited to the example in FIG. 17. For example, the animal detection processing may be performed by the animal detector 21 after the person detection processing performed by the person detector 22. The owner determination processing may be performed anytime by the owner determination part 26 as long as the owner determination processing is performed after the person detection processing performed by the person detector 22. For example, the owner determination processing may be performed before the animal detection processing performed by the animal detector 21.

However, preferably the method in FIG. 17 is adopted in the case that the load of the owner determination processing performed by the owner determination part 26 becomes the maximum. The processing sequence, in which the animal detection processing and the person detection processing are performed in first and the owner determination processing is performed only in the case that the animal and the person are detected, is the most suitable from the viewpoint of avoiding the high-load processing as much as possible. In the owner determination processing, sometimes both the result of the animal detection processing and the result of the person detection processing are used. In this case, it is necessary to perform the animal detection processing and the person detection processing in first.

### Fourth Embodiment

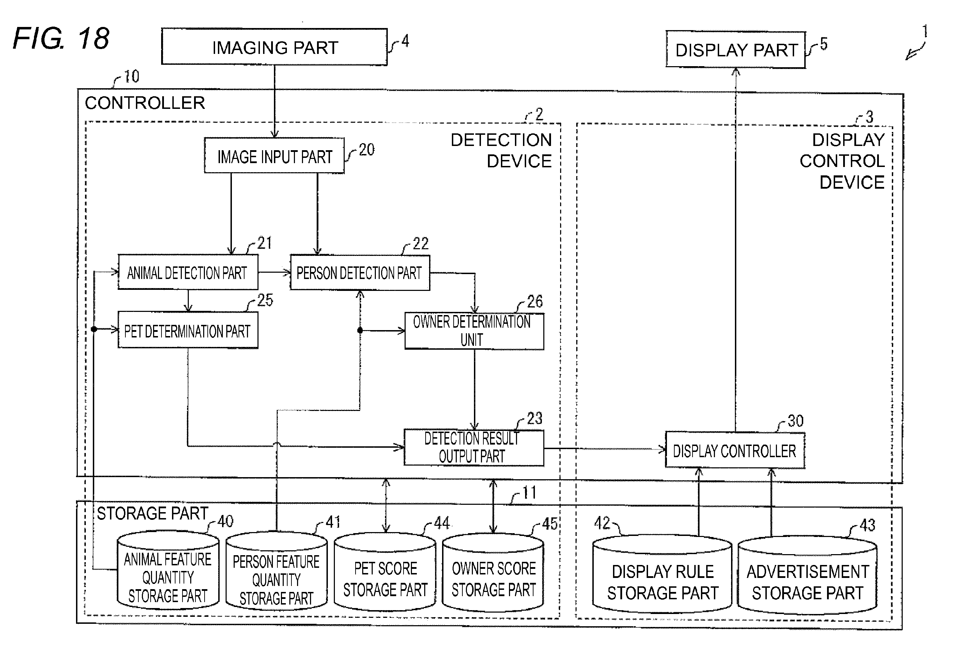

A detection device (and a display device) according to a fourth embodiment of the present invention will be described below with reference to FIGS. 18 to 20. For the sake of convenience, the component having the same function as that of the first to third embodiments is designated by the same numeral, and the description is omitted.

### [Configuration of Display Device]

FIG. 18 is a block diagram illustrating configurations of main portions of the detection device 2 and the display control device 3 in the display device 1 of the fourth embodiment. The display device 1 in FIG. 18 differs from the display devices 1 in FIGS. 1, 12, and 15 in that the detection device 2 includes the pet determination part 25, the pet score storage part 44, the owner determination part 26, and the owner score storage part 45. The controller 10 includes the pet determination part 25 and the owner determination part 26 as functional blocks. The storage part 11 includes the pet score storage part 44 and the owner score storage part 45.

In the fourth embodiment, the detection device 2 is intended to detect "at least one animal and at least one owner" from one image. That is, it is said that the body detected by the detection device 2 is "the pet and the owner".

Accordingly, the detection result output part 23 determines that the target body ("the pet and the owner") is detected, when the animal detector 21 detects the animal, when the person detector 22 detects the person, when the pet determination part 25 determines that the detected animal is the pet, and when the owner determination part 26 determines that the detected person is the owner. Only in the case that "the pet and the owner" are detected, the detection result output part 23 generates the detection result identification information indicating the identification information of "1 ", which expresses that the target body is detected. Otherwise the detection result output part 23 generates the detection result identification information indicating the identification information of "0", which expresses that the target body is not detected. The fourth embodiment differs from the first to third embodiments in that the determination that "the target body is not detected" is made, even if the animal and the person are detected, when the animal is not the pet or when the person is not the owner.

### [Processing Flow of Display Device]

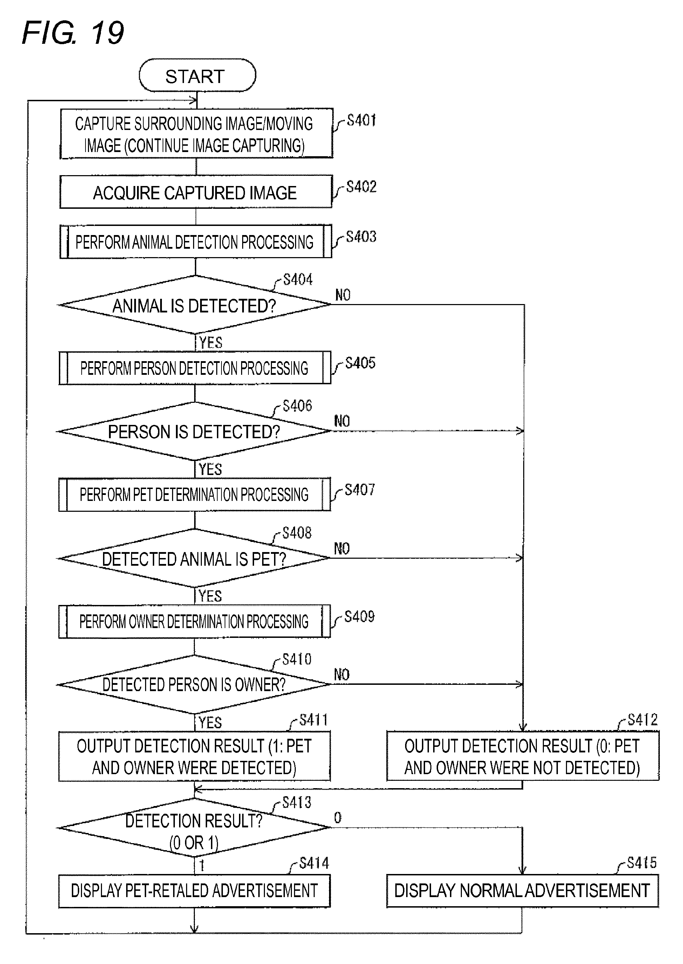

FIG. 19 is a flowchart illustrating a processing flow in the display device 1 of the fourth embodiment.

Because the operations of the detection device 2 in S401 to S406 are identical to those of the detection device 2 in S101 to S106 in FIG. 9, the overlapping description is omitted.

When the animal is not detected (NO in S404), or when the person is not detected (NO in S406), the detection result output part 23 generates the detection result identification information expressing that "the pet and the owner are not detected", and outputs the detection result 50 including the detection result identification information (S412).

On the other hand, when both the animal and the person are detected (YES in S404 and YES in S406), the pet determination part 25 performs the pet determination processing to at least one animal, which is detected from the image by the animal detector 21 (S407). The content of the pet determination processing is already described with reference to FIG. 13.

When the pet determination part 25 determines that the detected animal is not the pet (NO in S408), similarly the detection result output part 23 generates the detection result identification information expressing that "the pet and the owner are not detected", and outputs the detection result 50 including the detection result identification information (S412).

On the other hand, when the pet determination part 25 determines that the detected animal is the pet (YES in S408), the owner determination part 26 performs the owner determination processing to at least one person, which is detected from the image by the person detector 22 (S409). The content of the owner determination processing is already described with reference to FIG. 16.

When the owner determination part 26 determines that the detected person is not the owner (NO in S41 0), similarly the detection result output part 23 generates the detection result identification information expressing that "the pet and the owner are not detected", and outputs the detection result 50 including the detection result identification information (S412).

On the other hand, when the owner determination part 26 determines that the detected person is the owner (YES in S41 0), the detection result output part 23 generates the detection result identification information expressing that "the pet and the owner are detected", and outputs the detection result 50 including the detection result identification information (S411).

In the case that the plural animals are detected and in the case that whether each of the animals is the pet is determined, the detection result output part 23 may determine that "the pet is detected" when at least one animal is the pet. In the case that the plural persons are detected and in the case that whether each of the persons is the owner is determined, the detection result output part 23 may determine that "the owner is detected" when at least one person is the owner.

In the display control device 3, the display controller 30 specifies the advertisement image corresponding to the detection result identification information based on the detection result identification information that is included in the detection result 50 supplied from the detection result output part 23.

Because the operations of the detection device 2 in S413 to S415 are identical to those of the detection device 2 in S109 to S111 in FIG. 9, the overlapping description is omitted.

In the example in FIG. 19, the detection device 2 performs the animal detection processing in advance of the person detection processing. However, the processing sequence of the display device 1 is not limited to the example in FIG. 19. For example, the animal detection processing may be performed by the animal detector 21 after the person detection processing performed by the person detector 22.

The pet determination processing may be performed anytime by the pet determination part 25 as long as the pet determination processing is performed after the animal detection processing performed by the animal detector 21. For example, the pet determination processing may be performed before the person detection processing performed by the person detector 22. Alternatively, the owner determination processing may be performed anytime by the owner determination part 26 as long as the owner determination processing is performed after the person detection processing performed by the person detector 22. For example, the owner determination processing may be performed before the animal detection processing performed by the animal detector 21.

However, preferably the method in FIG. 19 is adopted in the case that the loads of the pet determination processing performed by the pet determination part 25 and the owner determination processing performed by the owner determination part 26 are greater than those of the animal detection processing and the person detection processing. The processing sequence, in which the animal detection processing and the person detection processing are performed in first and the pet determination processing and the owner determination processing are performed only in the case that the animal and the person are detected, is the most suitable from the viewpoint of avoiding the high-load processing as much as possible.

In the example in FIG. 19, the detection device 2 performs the pet detection processing in advance of the owner detection processing. However, the processing sequence of the display device 1 is not limited to the example in FIG. 19. For example, the sequences of the pet determination processing performed by the pet determination part 25 and the owner determination processing performed by the owner determination part 26 can be switched.

According to the above configuration and method, the animal detector 21 recognizes and detects the animal (region) when the animal is taken in the input image. On the other hand, the person detector 22 recognizes and detects the person (region) when the person is taken in the input image.

The pet determination part 25 further determines whether each animal detected by the animal detector 21 is the pet. On the other hand, the owner determination part 26 determines whether each person detected by the person detector 22 is the owner.

The detection result output part 23 outputs the detection result indicating that the target body is detected, when the animal detector 21 detects the animal, when the person detector 22 detects the person, when the pet determination part 25 determines that the detected at least one animal is the pet, and when the owner determination part 26 determines that the detected at least one person is the owner.

The detection result output from the detection result output part 23 is supplied to each part (for example, the display controller 30) that uses the detection result.

Accordingly, the detection device, which recognizes the pet and the owner and therefore determines that "the target body is detected", can be constructed.

As a result, the structural element or the device (for example, the display controller 30) on the usage side of the detection result can perform different pieces of processing based on whether both the pet and the owner are detected.

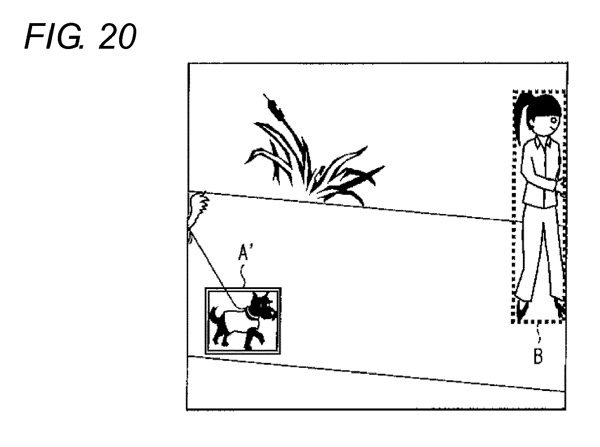

A scene in FIG. 20 will be described by way of example. FIG. 20 is a view illustrating a state in which, in the input image at a certain time point at which the image is captured by the imaging part 4, the animal region and the person region are specified through the body detection processing using the animal detector 21 and the person detector 22.

In the configurations of the first and second embodiments, because the detection device 2 determines that "the animal (the pet) and the person" are detected with respect to the input image in FIG. 20, the display control device 3 performs the control such that the pet-related advertisement is displayed.

However, in the scene in FIG. 20, possibly the pet and the person who has not relationship with the pet are incidentally located around the display device 1. There is a probability that the person neither likes the pet nor has an interest in the pet. In such cases, even if the pet-related advertisement is displayed, possibly the effect of the advertisement cannot be enhanced.

On the other hand, according to the configuration of the fourth embodiment, the owner determination part 26 determines that the person taken in the input image in FIG. 20 is not the owner. For example, the owner determination part 26 determines that the person is not the owner of the pet based on the facts that a hand of the person and the pet are not connected by the lead (or the lead-looking body), that the person and the pet are distant from each other, and that the person is not oriented toward the pet.

According to the determination result, the detection result output part 23 outputs the detection result identification information indicating the identification information of "0" to the display controller 30.

Accordingly, in the scene in FIG. 20, the display controller 30 does not specialize in the pet-related advertisement, but performs the control such that the normal advertisement is displayed. In the scene in FIG. 20, there is the high probability that the person who is located in the position where the person can visually recognize the advertisement has no interest in the pet. Therefore, it is said that the advertisement control is suitable for the scene.

As a result, the detection device 2 and the display control device 3 of the fourth embodiment can more correctly recognize the surrounding situation, and control the display device 1 in more effective timing such that the advertisement having the more effective contents is displayed.

In the above embodiments, each estimation part of the pet determination part 25 and the owner determination part 26 calculates the pet score and the owner score by the point-addition system. Alternatively, each estimation part of the pet determination part 25 may be configured to subtract the pet score when the not-pet-looking feature is found from the animal region. Alternatively, each estimation part of the owner determination part 26 may be configured to subtract the owner score when the not-owner-looking feature is found from the person region. The point-subtraction-system configurations of the pet determination part 25 and the owner determination part 26 can be applied to the following embodiment.

### Fifth Embodiment

In the configurations of the second and fourth embodiments, the pet determination part 25 and each estimation part of the pet determination part 25 calculate the pet score in order to determine whether each animal is the pet. However, the pet determination part 25 and each estimation part of the pet determination part 25 are not limited to the above configuration, but the pet determination part 25 and each estimation part of the pet determination part 25 may be configured to determine the pet attribute. A configuration of the main portion of the display device 1 of the fifth embodiment is identical to that in FIG. 12 or 18.

The detection result output part 23 generates the pet attribute information indicating the pet attribute based on the pet attribute determined by the pet determination part 25.

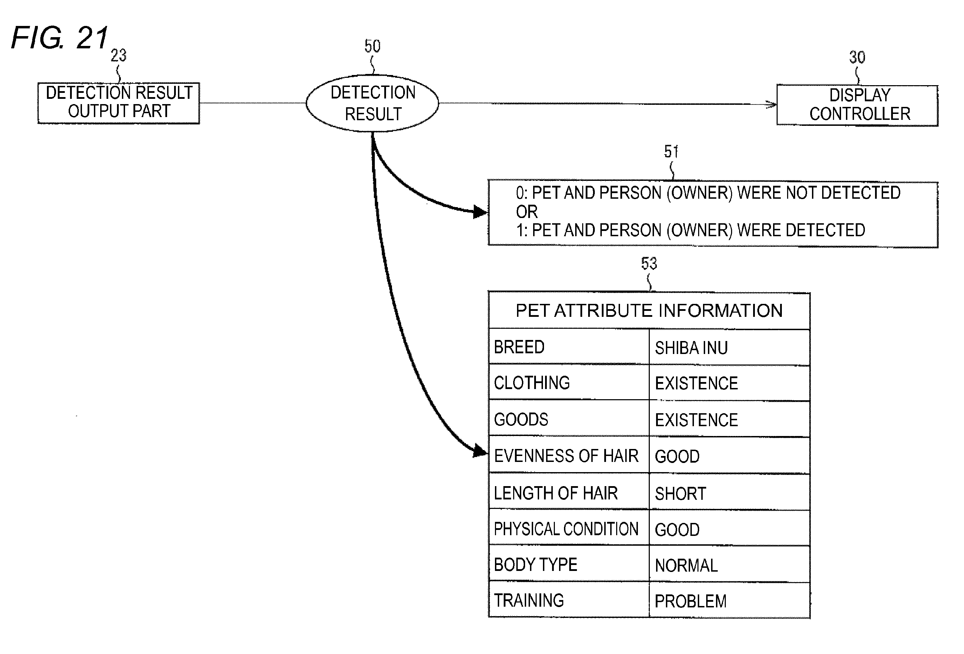

FIG. 21 is a view illustrating a specific example of the operation of the detection result output part 23, and an example of the pet attribute information generated by the detection result output part 23.

For example, it is assumed that each estimation part of the pet determination part 25 in FIG. 13 outputs the pet determination result d2 including the following estimation result to the detection result output part 23.

Specifically, the dog breed determination part 250 performs the image recognition to the animal taken in a certain animal region and estimates the dog breed of the animal. At this point, for example, the dog breed determination part 250 estimates that the dog breed is Shiba inu. The dog breed determination part 250 estimates whether the body type of the animal is large, normal, or small as Shiba inu based on the general information on the size of Shiba inu. For example, the dog breed determination part 250 estimates that the body type of the animal is normal.

The clothing estimation part 251 performs the image recognition to the article around the animal. For example, the clothing estimation part 251 estimates that the animal wears clothing (such as clothing and the collar) and that the animal chews goods (such as the ball).

The gesture estimation part 252 performs the gesture recognition of the animal. For example, the gesture estimation part 252 estimates whether the physical condition of the animal is good, normal, or bad based on whether the animal walks actively. For example, in the case that the animal actively moves legs to proceed, the gesture estimation part 252 estimates that the physical condition of the animal is good. The gesture estimation part 252 may estimate that the physical condition is good, normal, or bad according to the activity of the action.

The gesture estimation part 252 also estimates whether the training of the animal is good or bad. For example, in the case that the animal proceeds in a traveling direction different from that of the owner or in the case that the animal suddenly runs up to the bodies (such as another animal and another person) except the owner, the gesture estimation part 252 estimates that the training of the animal is "problem". On the other hand, the gesture estimation part 252 can estimate that the training of the animal is "no problem" in the case that the sudden change of the action of the animal is not observed, or in the case that the animal proceeds in the substantially same traveling direction as the owner at the substantially same speed as the owner.

The expression estimation part 254 may estimate the physical condition and the training of the animal instead of the gesture estimation part 252, or the gesture estimation part 252 and the expression estimation part 254 may estimate the physical condition and the training of the animal. The expression estimation part 254 can estimate that the physical condition of the animal is good based on such animal expressions that the animal delights or does not heave. On the other hand, the expression estimation part 254 can estimate that the physical condition of the animal is bad based on such animal expressions that the animal heaves and is tired, labored, or sad. The expression estimation part 254 can estimate whether the training of the animal is problem based on the animal expressions such that the animal barks or gets angry in various directions for a long time.

The evenness-of-hair estimation part 253 performs the image recognition to the region that is assumed to be a body hair of the animal. The evenness-of-hair estimation part 253 estimates whether the evenness of hair of the animal is good or bad and whether the body hair is long or short. For example, the evenness-of-hair estimation part 253 estimates that the evenness of hair is good when the body hair is shiny and when the evenness of hair is good. The evenness-of-hair estimation part 253 can also estimate whether the evenness of hair is normal or bad. Additionally, the evenness-of-hair estimation part 253 estimates whether a hair length is "long", "normal", or "short". For example, the evenness-of-hair estimation part 253 estimates that the hair length is "short" for the body hair of Shiba inu. The hair length may automatically be decided according to the dog breed when the dog breed determination part 250 estimates the dog breed.

For example, the estimation result of each estimation part is supplied from the pet determination part 25 to the detection result output part 23 while added on the pet determination result d2 in FIG. 13. As illustrated in FIG. 21, the detection result output part 23 generates pet attribute information 53 based on the estimation result added on the pet determination result d2.

The detection result output part 23 generates the table of the pet attribute information 53 with respect to the animal as illustrated in FIG. 21. Because the dog breed determination part 250 estimates that the dog breed of the animal is "Shiba inu", the detection result output part 23 stores the "Shiba inu" in a cell of an attribute item of "breed". Because the dog breed determination part 250 estimates that the body type of the animal is "normal", the detection result output part 23 stores the "normal" in an attribute item of "body type".

Because the clothing estimation part 251 estimates that the animal wears clothing and goods, the detection result output part 23 stores the "existence" in an attribute items of "clothing" and "goods".

Because the gesture estimation part 252 (and/or the expression estimation part 254) estimates that the physical condition of the animal is "good", the detection result output part 23 stores the "good" in an attribute items of "physical condition". Because the gesture estimation part 252 estimates that the training of the animal is "problem", the detection result output part 23 stores the "problem" in an attribute items of "training".

Because the evenness-of-hair estimation part 253 estimates that the evenness of hair of the animal is "good", the detection result output part 23 stores the "good" in an attribute items of "evenness of hair". Because the evenness-of-hair estimation part 253 estimates that the hair length of the animal is "short", the detection result output part 23 stores the "short" in an attribute items of "hair length".

The detection result output part 23 generates the detection result 50, and the detection result 50 includes the detection result identification information (for example, the detection result identification information 51) described in the first to fourth embodiments and the pet attribute information 53. The detection result output part 23 outputs the generated detection result 50 to the display controller 30.

In the fifth embodiment, the pet attribute information 53 is generated in the case of the identification information of "1", namely only in the case that the target body of "the pet and the person (or the owner)" is detected. In the case of the identification information of "0", the only the detection result identification information 51 indicating the identification information of "0" may be output as the detection result 50.

In FIG. 21, the pet attribute information 53 is illustrated as the data structure of the table form by way of example. There is no limitation to the data structure of the pet attribute information 53. The pet attribute information 53 may be configured with any data structure as long as the display controller 30 can recognize the correspondence relationship between the item of the pet attribute and the content of the item. The same holds true for other embodiments.

In the display control device 3, the display controller 30 acquires the detection result 50 from the detection result output part 23. It is assumed that the detection result 50 includes the detection result identification information 51 indicating the identification information of "1" and the pet attribute information 53. In this case, the display controller 30 controls the advertisement image displayed on the display part 5 according to the pet attribute detected around the display device 1 by the display rule stored in the display rule storage part 42. On the other hand, it is assumed that the detection result 50 includes the detection result identification information 51 indicating the identification information of "0". In this case, the display controller 30 displays the advertisement (for example, the normal advertisement) on the display part 5 according to the case of the identification information of "0" by the display rule stored in the display rule storage part 42.

In the first to fourth embodiments, the advertisement storage part 43 manages the advertisement images while classifying the advertisement images into some categories (for example, the pet-related advertisement and the normal advertisement). In the fifth embodiment, the category is used as "main category", each advertisement image belonging to one main category is finely classified according to the content of the advertisement. Hereinafter, the category used in the fine classification is referred to as a sub-category.

In the fifth embodiment, by way of example, each advertisement image belonging to a main category of "pet-related advertisement" is classified in one of the sub-categories, such as "Shiba-inu-related advertisement" (and other dog-breed-type-related advertisements). "pet-clothing-related advertisement", "pet-goods-related advertisement", "trimmer-related advertisement", "pet-food-related advertisement", "trainer-related advertisement", and "animal-hospital-related advertisement".

Each advertisement image is stored in the advertisement storage part 43 while correlated with an advertisement ID, a main category ID, and a sub-category ID. Therefore, the display controller 30 can recognize which main category and sub-category the advertisement belongs to.

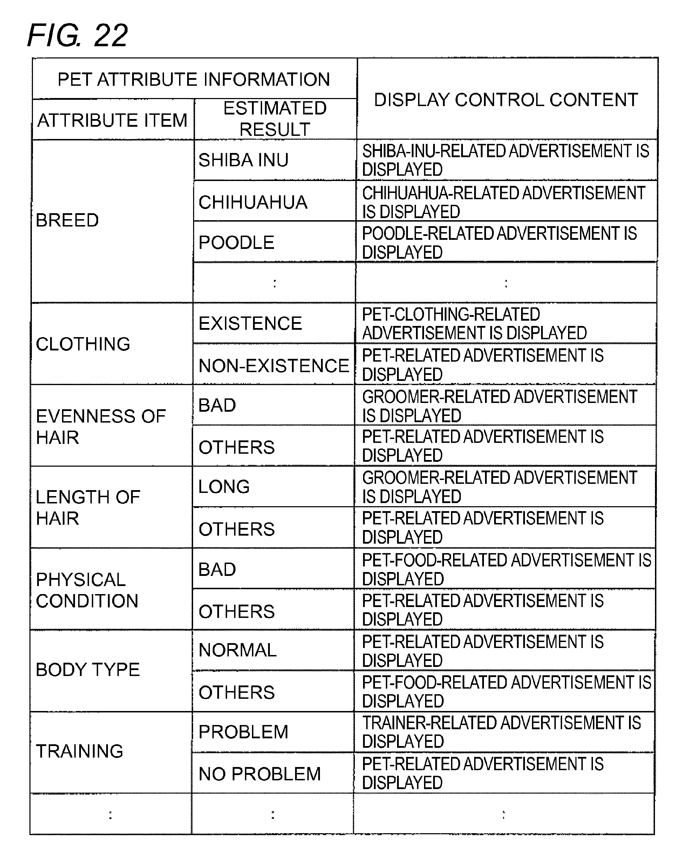

In the fifth embodiment, the display rule storage part 42 retains the display rule table in FIG. 6 as a first table, and retains a display rule table in FIG. 22 as a second table. FIG. 22 is a view illustrating an example of the display rule stored in the display rule storage part 42.

The display controller 30 refers to the first table. In the example in FIG. 6, the detection result identification information 51 indicating the identification information of "0" is correlated with "normal advertisement". Therefore, in the case of the identification information of "0", the display controller 30 reads each advertisement image belonging to the main category of "normal advertisement" from the advertisement storage part 43, and displays the advertisement image on the display part 5.

On the other hand, the detection result identification information 51 indicating the identification information of "1" is correlated with "pet-related advertisement". Therefore, in the case of the identification information of "1", the display controller 30 refers to the second table. As used herein, the second table means a table of a second display rule, in which the detected pet attribute is correlated with the sub-category of the advertisement image that should be displayed when the pet having the attribute emerges in the main category of "pet-related advertisement".

As illustrated in FIG. 22, in the table of the second display rule, the estimation result of each attribute item generated by the detection result output part 23 is correlated with the sub-category ID of the advertisement image corresponding to the estimation result. Each advertisement image (or the advertisement ID) may be correlated.

For example, in the case that "Shiba inu" is stored in the attribute item of "breed" with respect to the pet attribute information 53, the display controller 30 specifies the display image belonging to the sub-category of "Shiba-inu-related advertisement" as the advertisement image to be displayed based on the display rule in FIG. 22.

Similarly, the display controller 30 specifies the advertisement images corresponding to all the attribute items included in the pet attribute information 53 based on the display rule.

The display controller 30 reads the specified advertisement image from the advertisement storage part 43, and displays the advertisement image on the display part 5.

According to the above configuration, when the detection device 2 detects the person (or the owner) and the pet in the position where the person can visually recognize the advertisement displayed on the display part 5, the detection result output part 23 of the detection device 2 outputs the detection result 50 while the pet attribute information 53 is added on the detection result 50 in addition to the detection result identification information 51 indicating that "the pet and the person (the owner)" are detected. The pet attribute information 53 includes various pieces of information indicating the attribute of the pet, which is detected in the position where the person can visually recognize the advertisement displayed on the display part 5 (that is, near the detected person). In the case that plural pets are detected, the detection result output part 23 may generate the pet attribute information 53 in each pet, or the detection result output part 23 may generate the pet attribute information 53 with respect to only one representative pet. For example, the pet located closest to the detected person or the pet located closest to the display part 5 may be selected as the representative pet.

In the case that the detection result identification information 51 indicates that "the pet and the person (the owner)" are detected, the display controller 30 of the display control device 3 specifies the advertisement image corresponding to the pet attribute information 53 by the display rule. Specifically, the display controller 30 specifies the advertisement image (or the sub-category of the advertisement image) correlated with the estimation result of each attribute item included in the pet attribute information 53 in the display rule table stored in the display rule storage part 42.

Therefore, in the case that the person (or the owner) and the pet are detected in the position where the person can visually recognize the advertisement displayed on the display part 5, the pet-related advertisement corresponding to the pet attribute can be displayed on the display part 5.

The person who is detected together with the pet has the high probability that the person is the owner of the pet, and it is considered that the person has the particular interest in the advertisement image that is displayed while correlated with the pet attribute. Specifically, for example, the owner who causes the pet to wear the clothing has the high probability that the owner pays attention to the pet-clothing-related advertisement related to the clothing of the pet. The owner who keeps the pet having the long hair has the high probability that the owner pays attention to the trimmer-related advertisement. The owner who is anxious about the training of the pet has the high probability that the owner pays attention to the trainer-related advertisement. In the case that the body type of the pet is extremely overweight or underweight, the owner has the high probability that the owner pays attention to the pet-food-related advertisement.

Thus, the advertisement control in which the pet-related advertisement is displayed in each sub-category according to the pet attribute is suitable for the scene.

As a result, the detection device 2 and the display control device 3 of the fifth embodiment can more correctly recognize the surrounding situation (particularly the pet attribute and the interest of the owner related to the pet), and control the display device 1 in more effective timing such that the advertisement having the more effective contents is displayed.

In the configuration of the fifth embodiment, the pet determination part 25 and each estimation part of the pet determination part 25 determine the pet attribute. The detection device 2 of the present invention is not limited to the fifth embodiment, but the owner determination part 26 and each estimation part of the owner determination part 26 may determine the owner attribute.

In this case, the detection result output part 23 generates the owner attribute information indicating the owner attribute based on the owner attribute determined by the owner determination part 26.

The owner attribute information and the detection result identification information 51 supplied to the display controller 30 while the owner attribute information is added on the detection result 50. Therefore, the display controller 30 can recognize the owner attribute, select the advertisement image that may attract the interest of the owner around the display part 5, and display the advertisement image on the display part 5.

### Sixth Embodiment

In the configurations of the above embodiments, the detection result output part 23 of the detection device 2 supplies the detection result identification information indicating whether the target body of "the animal (the pet) and the person (the owner)" are detected to the display control device 3. More particularly, the detection result output part 23 is configured to generate the detection result identification information 51 as the detection result 50 based on the processing results output from the animal detector 21, the person detector 22, the pet determination part 25, and the owner determination part 26 (or some of these parts).

However, the detection device 2 of the present invention is not limited to the configurations of the above embodiments. In the case that the detection target body is two kinds of bodies like " the animal (the pet) and the person (the owner), the detection device 2 may be configured to pair the detected different kinds of bodies (pairing). The detection result output part 23 may be configured to generate information (correspondence information) indicating the correspondence relationship and supply the correspondence information as a portion of the detection result 50 to the display control device 3 or another device that uses the detection result 50.

In the above embodiments, the detection device 2 of the present invention is applied to the display device 1 (digital signage). However, the detection device 2 of the present invention can be applied to not only the display device 1 but also any device that uses the detection result 50 output from the detection device 2. For example, the detection device 2 of the present invention can be applied to a digital camera that captures the still image or the moving image.

A detection device 2 according to a sixth embodiment of the present invention is applied to the digital camera as described below. The detection device 2 of the sixth embodiment has a function of pairing the objective bodies, namely, the animal (the pet) and the person (the owner).

### [Configuration of Digital Camera]

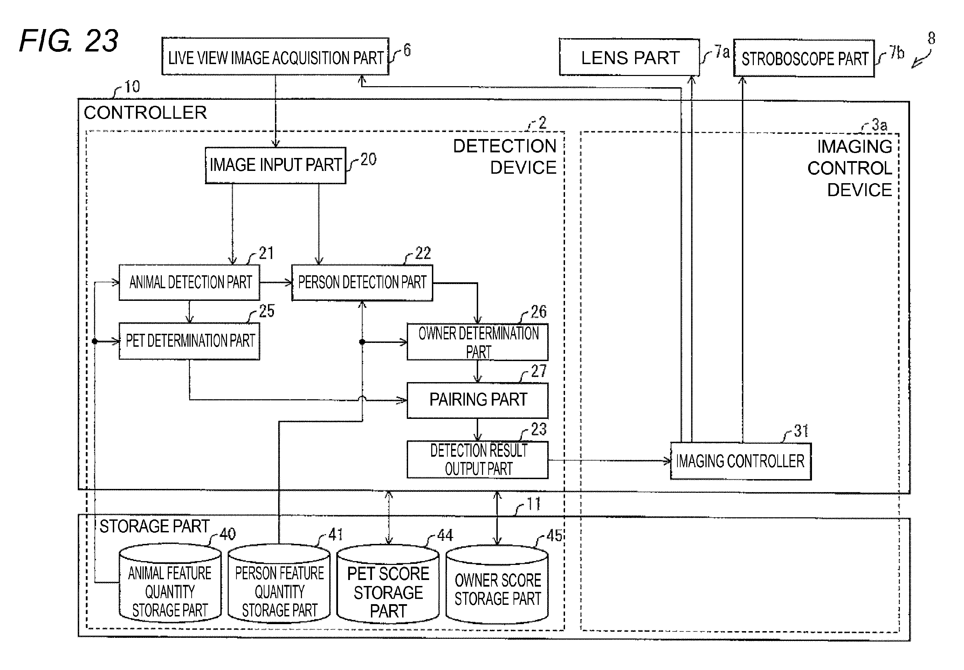

FIG. 23 is a block diagram illustrating configurations of main portions of a detection device 2 and an imaging control device 3a in a digital camera 8 of the sixth embodiment. In addition to the following configurations, it is assumed that the digital camera 8 includes typical hardware configuration and software configuration, which should be included in order to act as a well-known digital camera.

As illustrated in FIG. 23, the digital camera 8 includes a live view image acquisition part 6, a lens part 7a, a stroboscope part 7b, the controller 10, and the storage part 11 as the hardware configuration.

The live view image acquisition part 6 acquires a live view image. The live view image is an image that is received by an imaging element through the lens part 7a, namely, a preview image before the still image is captured. For example, the live view image acquisition part 6 is incorporated in a main body of the digital camera 8. The live view image acquisition part 6 includes a mirror mechanism (not illustrated), the imaging element, an A/D converter, and an image display circuits. In the digital camera 8, each part of the live view image acquisition part 6 is controlled by an imaging controller 31 that acts as the imaging control device 3a.

The live view image acquired by the live view image acquisition part 6 is displayed on a display part (not illustrated), and the live view image is used to check what kind of a still image is captured before a photographer actually presses a shutter.

In the sixth embodiment, the live view image acquired by the live view image acquisition part 6 is supplied to the image input part 20 of the detection device 2, and the detection device 2 uses the live view image to detect the target body.

The lens part 7a introduces an imaging light flux from the subject into the main body such that an subject image is received by the imaging element incorporated in the main body of the digital camera 8. The lens part 7a includes plural lens groups, a diaphragm, a lens control circuit, and a diaphragm control circuit. In the digital camera 8, each part of the lens part 7a is controlled by the imaging controller 31 that acts as the imaging control device 3a.

The stroboscope part 7b is a light emitting device that emits a flash toward the subject to ensure a light quantity necessary for the image capturing. The stroboscope part 7b includes a light source, an emission control circuit, a charge circuit, and a power supply. In the digital camera 8, each part of the stroboscope part 7b is controlled by the imaging controller 31 that acts as the imaging control device 3a.

The controller 10 totally controls parts included in the digital camera 8. For example, the controller 10 is constructed by the CPU, and the functions of the digital camera 8 are implemented such that the CPU that is the controller 10 reads the program stored in the ROM (the storage part 11) on the RAM (the storage part 11) and executes the program.

At least various programs and pieces of data are stored in the storage part 11 in order to implement the body detection function performed by the detection device 2 mounted on the digital camera 8. Specifically, the storage part 11 includes the animal feature quantity storage part 40 and the person feature quantity storage part 41. As needed basis, the storage part 11 may includes the pet score storage part 44 and the owner score storage part 45.

The controller 10 includes the image input part 20, the animal detector 21, the person detector 22, and the detection result output part 23 as functional blocks. The functional blocks express a software configuration that acts as the detection device 2 in the digital camera 8. As needed basis, the controller 10 may includes or partially include the pet determination part 25, the owner determination part 26, and a pairing part 27 as functional blocks of the detection device 2.

In the sixth embodiment, various programs and pieces of data (not illustrated) may be stored in the storage part 11 in order to implement an imaging control function performed by the imaging control device 3a mounted on the digital camera 8.

The controller 10 may further include the imaging controller 31 as a functional block. In the digital camera 8, the imaging controller 31 that is the functional block expresses the software configuration that acts as the imaging control device 3a. The imaging controller 31 implements an imaging function by totally controlling the main body constituting the digital camera 8, the lens part 7a, and the stroboscope part 7b.

Each functional block of the controller 10 can be implemented such that the CPU reads a program for data management function stored in the storage device (storage part 11) constructed by the ROM and the NVRAM on the RAM (not illustrated) and executes the program.

In the sixth embodiment, the image input part 20 acquires the image that becomes the body detection processing target from the live view image captured by the live view image acquisition part 6, and the image input part 20 inputs the acquired image to the animal detector 21 and the person detector 22.

The pairing part 27 performs pairing processing in which the animal (or the pet) detected by the animal detector 21 and the person (or the owner) detected by the person detector 22 or the owner determination part 26 are paired while correlated with each other.

### (Pattern 1) Pairing of the animal and the person

In the case that the detection device 2 includes the animal detector 21 and the person detector 22, the pairing part 27 pairs the animal and the person, which are detected by the animal detector 21 and the person detector 22.

For example, as illustrated in FIG. 20, in the case that one animal and one person are detected from the input image, the pairing part 27 may pair the animal and the person while correlating the animal and the person with each other.

On the other hand, in the case that plural persons are detected as illustrated in FIG. 4A, the pairing part 27 may pair the detected animal (the animal in the animal region A) and the person (at this point, the person in the person region B) closest to the animal.

In the case that plural animals are detected as illustrated in FIG. 4D, similarly the pairing part 27 may pair the person (the person in the person region B") and the animal (at this point, the animal in the animal region A') closest to the person.

The pairing part 27 outputs the correspondence information on the pairing of the animal and the person to the detection result output part 23.

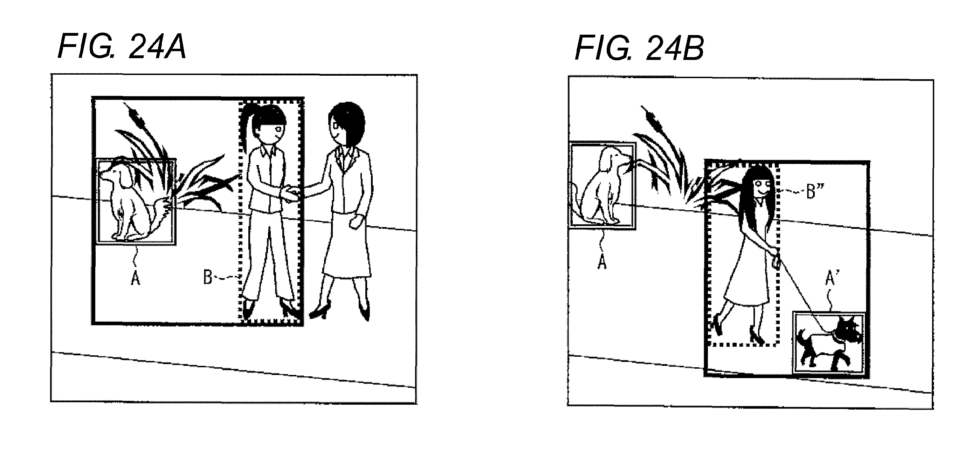

FIGS. 24A and 24B are views illustrating a state in which the animal region and the person region are paired through pairing processing performed by the pairing part 27 in the input images in FIGS. 4A and 4D in which the animal region and the person region are specified.

In FIGS. 24A and 24B, the pairing part 27 allocates one frame (a bold-line frame) to one animal region and one person region, and the one animal region and the one person region are paired.

The pairing part 27 may implement the correspondence information by not the bold-line frame but using identification information uniquely allocated to each region. For example, in FIG. 24A, because the animal region A and the person region B are correlated with each other, the pairing part 27 outputs correspondence information of "A-B" to the detection result output part 23. In this case, preferably the detection result output part 23 previously acquires pieces of information on the region A, the region B, the animal region and the person region from the animal detector 21 or the person detector 22.

### (Pattern 2) Pairing of the pet and the person

In the case that the detection device 2 includes the pet determination part 25 in addition to the animal detector 21 and the person detector 22, the pairing part 27 pairs the animal, which is determined to be the pet by the pet determination part 25 in the animals detected by the animal detector 21, and the person detected by the person detector 22.

According to the above configuration, in the scene in FIG. 24A, the pet determination part 25 determines that the animal in the animal region A is not the pet. For example, each estimation part of the pet determination part 25 and the pet determination part 25 perform an image analysis such that the collar does not exist, such that the lead does not exist, such that the animal is the mixed breed, and such that the animal is not oriented toward the person, and the estimation part of the pet determination part 25 and the pet determination part 25 determine that the animal in the animal region A is not the pet.

The pairing part 27 decides that the animal and the person are not paired when the animal is not the pet. In Pattern 2, the pairing part 27 does not find the pair in the scene in FIG. 24A.

The animal and the person, which have no relationship with each other, are mistakenly paired in Pattern 1. However, the mistake can be avoided in Pattern 2. As a result, the pairing accuracy can be enhanced.

In the case that plural pets are detected, the pairing part 27 can pair the detected person and the pet closest to the person.

### (Pattern 3) Pairing of the animal and the owner

In the case that the detection device 2 includes the owner determination part 26 in addition to the animal detector 21 and the person detector 22, the pairing part 27 pairs the animal detected by the animal detector 21 and the person, who is determined to be the owner by the owner determination part 26 in the persons detected by the person detector 22.

According to the above configuration, in the scene in FIG. 20, the animal region A' and the person region B are detected, and the owner determination part 26 determines that the person in the person region B is not the owner. For example, each estimation part of the owner determination part 26 and the owner determination part 26 perform the image analysis such that the person does not have goods, such that the person does not have a lead, such that the animal region A' and the person region B are not connected by the lead-looking body, and such that the eye line of the person is not oriented toward the animal, and the estimation part of the owner determination part 26 and the owner determination part 26 determine that the person in the person region B is not the owner.

The pairing part 27 decides that the animal and the person are not paired when the person is not the owner. In Pattern 3, the pairing part 27 does not find the pair in the scene in FIG. 20.

The animal and the person, which have no relationship with each other, are mistakenly paired in Pattern 1. However, the mistake can be avoided in Pattern 3. As a result, the pairing accuracy can be enhanced.

In the case that plural owners are detected, the pairing part 27 can pair the detected animal and the owner closest to the animal.

### (Pattern 4) Pairing of the pet and the owner

In the case that the detection device 2 includes the pet determination part 25 and the owner determination part 26 in addition to the animal detector 21 and the person detector 22, the pairing part 27 pairs the animal, which is determined to be the pet by the pet determination part 25 in the animals detected by the animal detector 21, and the person, who is determined to be the owner by the owner determination part 26 in the persons detected by the person detector 22.

According to the above configuration, in the scene in FIG. 24A, the pairing part 27 does not pair the animal and the person when the animal in the animal region A is not the pet or when the person in the person region B is not the owner.

Referring to the scene in FIG. 24B, even if the animal in the animal region A is located closer to the person in the person region B" than the animal in the animal region A', the pairing part 27 does not mistakenly pair the animal in the animal region A and the person in the person region B". This is because the animal in the animal region A is determined to be not the pet.

The animal and the owner, which have no relationship with each other, are mistakenly paired in Pattern 3. However, the mistake can be avoided in Pattern 4. As a result, pairing accuracy can be enhanced.

Referring to the scene in FIG. 24B, even if the person in the person region B in FIG. 24A is located closer to the animal in the animal region A' than the person in the person region B"', the pairing part 27 does not mistakenly pair the person in the person region B and the animal in the animal region A'. This is because the person in the person region B is determined to be not the owner, or because the person in the person region B" is determined to be the owner-looking feature (high owner score).

The pet and the person, which have no relationship with each other, are mistakenly paired in Pattern 2. However, the mistake can be avoided in Pattern 4. As a result, the pairing accuracy can further be enhanced.

In the case that plural pets and plural owners are detected, the pairing part 27 can pair the pet and the owner, which are located closest to each other.

### (Pattern 5) Pairing according to the lead position

It is conceivable that the detection device 2 includes a lead position estimation part 261 of the owner determination part 26 in addition to the animal detector 21 and the person detector 22.

In this case, the pairing part 27 recognizes the linear body that connects the animal (the animal region) and the person (the person region) as the leads from the input image through the lead position estimation part 261. The animal and the person, which are connected by the recognized lead, are paired in the animals and the persons, which are detected from the input image.

When the person leads the animal using the lead, it is clear that the relationship of the owner and the pet exists between the person and the animal.

In Patterns 1 to 4, possibly the pairing processing is mistakenly performed in the case that the pet and the person, which have no relationship with each other, happen to come close to each other. However, the mistake can be avoided in Pattern 5. As a result, the pairing accuracy can further be enhanced. When the pairing processing in Pattern 4 is combined with the pairing processing in Pattern 5, the condition to pair the animal and the person becomes severer, and therefore the pairing accuracy can further be enhanced.

In the case of the small pet, instead of articles, such as the lead, it is considered that the person carries the pet while accommodating the pet in the case (such as the bag and the cage). Therefore, in the case that the goods estimation part 260 recognizes the case in which the animal is accommodated and the person who carries the case, the pairing part 27 may pair the animal and the person.

The detection result output part 23 generates the detection result 50 including the correspondence information generated by the pairing part 27, and supplies the detection result 50 to the imaging controller 31. In the sixth embodiment, the detection result output part 23 may add the detection result identification information 51 or the detection result identification information 52 and the pet attribute information 53, which are described in the first to fifth embodiments, on the detection result 50.

Therefore, the imaging controller 31 can perform the imaging control of the digital camera 8 based on the detection result 50.

As described above, the imaging controller 31 totally controls each part related to the imaging function of the digital camera 8. At this point, the imaging function may be either the function of capturing the still image or the function of capturing the moving image.

In the sixth embodiment, for example, the imaging controller 31 controls an exposure value, an aperture value, a focal position, the existence or non-existence of the stroboscope emission, and the shutter speed such that the image of the objective subject is captured clearly in focus in priority to the background.

The imaging controller 31 determines whether the object taken in the live view image is the objective subject or the background based on the correspondence information output from the detection result output part 23.

For example, as illustrated in FIG. 24B, it is assumed that the correspondence information generated by the detection result output part 23 indicates that the person in the person region B" and the animal in the animal region A' are paired. In this case, the imaging controller 31 determines that the objective subject is the person in the person region B" and the animal in the animal region A'. The imaging controller 31 determines that others (for example, the animal in the animal region A) are the background.

Based on the determination, the imaging controller 31 controls each part of the digital camera 8, namely, the lens part 7a and the stroboscope part 7b such that the images of the person in the person region B" and the animal in the animal region A', which are the objective subject, are clearly captured. For example, the imaging controller 31 controls the exposure value, the aperture value, the focal position, the existence or non-existence of the stroboscope emission, and the shutter speed.

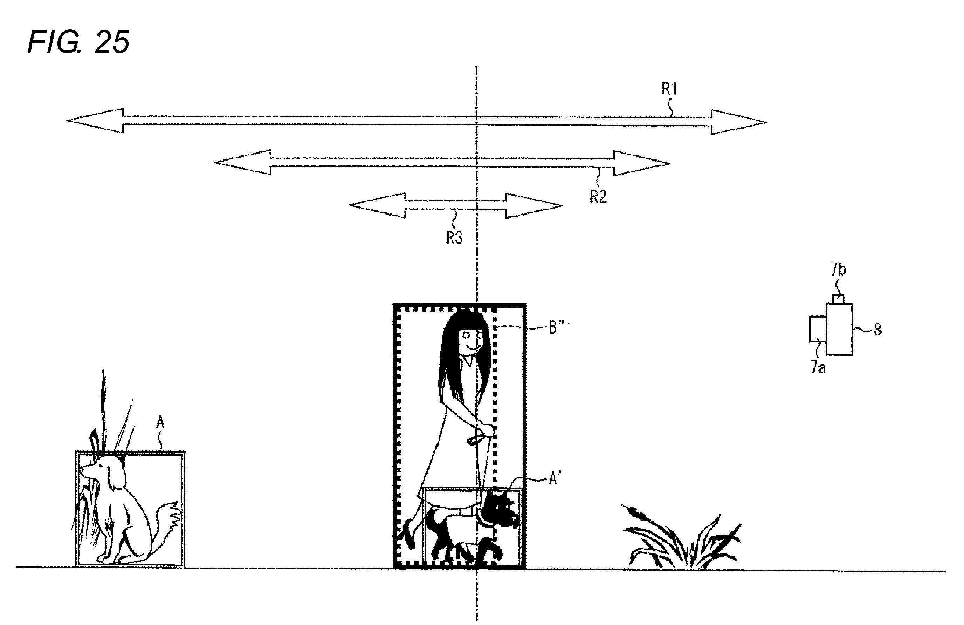

FIG. 25 is a view illustrating a usage scene of the digital camera of the sixth embodiment.

For example, based on the correspondence information, the imaging controller 31 controls the lens part 7a such that the person in the person region B" (or the animal in the animal region A') that is the objective subject is focused. In FIG. 25, the digital camera 8 focuses on the face (position indicated by an alternate long and short dash line) of the person in the person region B" under the control of the imaging controller 31.

The imaging controller 31 may decide which one of "the animal and the person" of the objective subject is focused according to a previously-determined rule. According to a rule of "person priority", as illustrated in FIG. 25, the imaging controller 31 can focus on the face of the person in the objective subject. According to a rule of "animal priority", the imaging controller 31 can focus on the face of the animal (animal region A') in the objective subject.

The imaging controller 31 may control the aperture value by controlling a diaphragm mechanism (not illustrated) included in the lens part 7a. The imaging controller 31 can adjust a depth of field by controlling the diaphragm mechanism. The imaging controller 31 controls the aperture value such that the images of other objective subjects located in front of and at the back of the focal position (position indicated by the alternate long and short dash line) are clearly formed.

For example, in the case that the correspondence information indicates that the person in the person region B" and the animal in the animal region A' are the pair, the imaging controller 31 obtains the aperture value such that the depth of field becomes R3, and the imaging controller 31 controls the diaphragm mechanism. Therefore, only the images of the person in the person region B" and the animal in the animal region A' are clearly captured, and other subjects are blurred as the background.

In the case that the correspondence information indicates that the person in the person region B" and the animal in the animal region A are the pair, the imaging controller 31 determines that both the person and the animal are the objective subject. The imaging controller 31 obtains the aperture value, in which the depth of field becomes R1, such that the images of the person in the person region B" and the animal in the animal region A are clearly formed, and the imaging controller 31 controls the diaphragm mechanism. Therefore, both the images of the person in the person region B" and the animal in the animal region A, which fall within the depth of field R1, are clearly captured.

According to the configuration of the sixth embodiment, even if the plural animals and persons exist in the range where the digital camera 8 can capture the image, the objective subject of the combination of the animal and the person can be determined based on the correspondence information.

When the person who has the relationship with the animal is the objective subject, the animal that has the relationship with the person has the high probability of the objective subject even if the animal is distant from the person. On the other hand, even if another animal exists close to the person, when another animal has no relationship with the person, another animal has the low probability of the objective subject.

According to the above configuration, the pairing part 27 estimates the relationship of the detected animal and person by the image recognition, so that the objective subject of "the animal and the person" can be specified with higher accuracy.

Therefore, the digital camera 8 can clearly capture the image of the objective subject according to the intention of the photographer. The photographer can be prevented from focusing on the unintended subject (for example, the animal in the animal region A in FIG. 25).

The invention is not limited to the first to sixth embodiments, but various changes can be made without departing from the scope of the invention. An embodiment obtained by appropriately combining technical means disclosed in the different embodiments is also included in the technical range of the invention.

### [Example Implemented by Software]

Each block of the detection device 2 (and the display control device 3), particularly the image input part 20, the animal detector 21, the person detector 22, the detection result output part 23, the object detector 24, the pet determination part 25, the owner determination part 26 and the pairing part 27, and the display controller 30 and the imaging controller 31 may be constructed by a hardware logic or implemented by software using the CPU.

That is, the detection device 2 (display control device 3) includes the CPU that executes a command of a control program realizing each function, the ROM in which the program is stored, the RAM in which the program is expanded, and the storage device (the recording medium) such as a memory in which the program and various pieces of data are stored. The object of the present invention can also be implemented such that a recording medium in which a program code (an execute-form program, an intermediate-code program, and a source program) of the control program of the detection device 2 (the display control device 3), which is the software implementing the above functions, is stored in a computer-readable manner is supplied to the detection device 2 (the display control device 3) and such that the computer (or the CPU or the MPU) reads and executes the program code recorded in the recording medium.

Examples of the recording medium include tape system such as magnetic tape and cassette tape, disk systems including magnetic disks such as floppy disk (registered trademark) and a hard disk and optical disks such as a CD-ROM, an MO an MD, a DVD, and a CD-R, card systems such as an IC card (including a memory card) and an optical card, and semiconductor memory systems such as a mask ROM, an EPROM, an EEPROM and a flash ROM.

The detection device 2 (the display control device 3) may be configured to be able to be connected to a communication network, and the program code may be supplied through the communication network. There is no particular limitation to the communication network. Examples of the communication network include the Internet, an intranet, an extranet, a LAN, an ISDN, a VAN, a CATV communication network, a virtual private network, a telephone line network, a mobile communication network, and a satellite communication network. There is no particular limitation to a transmission medium included in the communication network. Examples of the transmission medium include wired lines such as IEEE 1394, a USB, a power-line carrier, a cable TV line, a telephone line, and an ADSL line and wireless lines such as infrared ray such as IrDA and a remote controller, Bluetooth (registered trademark), 802.11 wireless, HDR (High Data Rate), a mobile telephone network, a satellite line, and a terrestrial digital network. The invention can be implemented in the form of a computer data signal embedded in a carrier wave in which the program code is embodied by electronic transmission.

The detection device of the present invention can widely be applied to various kinds of information processing apparatus, which use the detection result output from the detection device and perform different pieces of processing according to the detection result. The detection device of the present invention can be applied to the display control device, and the display control device can display different images on the display device according to the detection result. The detection device of the present invention can be applied to the imaging control device, and the imaging control device can control the camera such that the images of different subjects are clearly captured according to the detection result.

## Claims

1. A detection device comprising:
an animal detection part configured to detect an animal from a captured image;
a person detection part configured to detect a person from the image; and
a detection result output part configured to output a detection result including at least information indicating that a target body is detected when the animal detection part detects the animal from the image and the person detection part detects the person from the image.

2. The detection device according to claim 1, further comprising
a pet determination part configured to determine whether the animal detected from the image by the animal detection part is a pet kept by a person, wherein
the detection result output part outputs the detection result including the information indicating that the target body is detected when the animal determined to be the pet by the pet determination part is detected from the image and the person detection part detects the person from the image.

3. The detection device according to claim 1, further comprising
an owner determination part configured to determine whether the person detected from the image by the person detection part is an owner who keeps an animal, wherein
the detection result output part outputs the detection result including the information indicating that the target body is detected when the person determined to be the owner by the owner determination part is detected from the image and the animal detection part detects the animal from the image.

4. The detection device according to claim 1, further comprising:
a pet determination part configured to determine whether the animal detected from the image by the animal detection part is a pet kept by a person; and
an owner determination part configured to determine whether the person detected from the image by the person detection part is an owner who keeps an animal, wherein
the detection result output part outputs the detection result including the information indicating that the target body is detected when the animal determined to be the pet by the pet determination part is detected from the image and the person determined to be the owner by the owner determination part is detected from the image.

5. The detection device according to claim 2 or 4, wherein
the pet determination part determines whether the animal is the pet by comparing feature quantity data, which is extracted from an animal region including the animal on the image and reflects a feature of the animal, to feature quantity data of a model that reflects one of a pet-looking feature and a not-pet-looking feature.

6. The detection device according to claim 3 or 4, wherein
the owner determination part determines whether the person is the owner by comparing feature quantity data, which is extracted from an person region including the person on the image and reflects a feature of the person, to feature quantity data of a model that reflects one of an owner-looking feature and a not-owner-looking feature.

7. The detection device according to any one of claims 2, 4, and 5, wherein
the pet determination part further determines an attribute of the animal determined to be the pet, and
the detection result output part includes pet attribute information indicating the pet attribute determined by the pet determination part in the detection result.

8. The detection device according to any one of claims 1 to 7, further comprising
a pairing part configured to pair the animal detected from the image by the animal detection part with the person detected from the image by the person detection part while correlating the animal with the person, wherein
the detection result output part includes correspondence information indicating a correspondence relationship of the animal and the person, which are paired with each other by the pairing part, in the detection result.

9. The detection device according to claim 8, wherein
the pairing part pairs the animal and the person, which are closest to each other, within the animals and the persons, which are detected from the image.

10. The detection device according to claim 8 or 9, wherein
the pairing part
recognizes a linear body connecting the animal and the person as a lead from the image, and
pairs the animal and the person, which are connected by the recognized lead, within the animals and the persons, which are detected from the image.

11. The detection device according to any one of claims 8 to 10, further comprising:
a pet determination part configured to determine whether the animal detected from the image by the animal detection part is a pet kept by a person; and
an owner determination part configured to determine whether the person detected from the image by the person detection part is an owner who keeps an animal, wherein
the pairing part pairs the animal determined to be the pet with the person determined to be the owner within the animals and the persons, which are detected from the image.

12. A display control device comprising
a display controller configured to control a display part in response to the detection result output from the detection device according to any one of claims 1 to 7, wherein
the image is an image in which a body located in a position where the display part can visually be recognized is captured, and
the display controller displays a pet-related image related to the pet on the display part when the detection result includes the information indicating that the target body is detected.

13. The display control device according to claim 12, wherein
the display controller controls the display part in response to the detection result output from the detection device according to claim 7, and displays a pet-related image corresponding to the pet attribute in the pet-related image on the display part in response to the pet attribute information included in the detection result.

14. An imaging control device comprising
an imaging controller configured to control a camera in response to the detection result output from the detection device according to any one of claims 8 to 11, wherein
the image is a live view image captured by the camera,
the imaging controller specifies the pair of the animal and the person, which is indicated by the correspondence information included in the detection result, as an objective subject, and the imaging controller controls the camera such that the image of the objective subject is clearly captured.

15. A body detection method comprising the steps of:
detecting an animal from a captured image;
detecting a person from the image; and
outputting a detection result including at least information indicating that a target body is detected when the animal is detected from the image in the animal detection step and the person is detected from the image in the person detection step.

16. A control program that causes a computer to act as each part of the detection device according to any one of claims 1 to 11.

17. A computer-readable recording medium in which the control program according to claim 16 is recorded.
